# EUROPEAN PATENT SPECIFICATION

(11) **EP 1 365 957 B1**
(45) Date of publication and mention of the grant of the patent: **03.08.2005**
(21) Application number: 02711059.2
(22) Date of filing: 11.02.2002
(51) Int. Cl.: B65D 1/00

(54) **CLOSURE AND CONTAINER IN COMBINATION**
VERSCHLUSS UND BEHÄLTER KOMBINATION
ENSEMBLE RECIPIENT-FERMETURE

(30) Priority: 15.02.2001 GB 0103770
(43) Date of publication of application: 03.12.2003
(73) Proprietor: Portola Packaging Limited, Doncaster, South Yorkshire DN4 5NT (GB)
(72) Inventor: MAVIN, Gerry, Northumberland NE63 8QX (GB); GLOVER, Stephen, Doncaster, South Yorkshire DN5 8LD (GB); STEPHENSON, Timothy, Graham, Doncaster, South Yorkshire DN11 0FF (GB); SKILTON, John, Victor, 28211 Bremen (DE)
(74) Representative: McLeish, Nicholas Alistair Maxwell
(86) International application number: PCT/GB2002/000592
(87) International publication number: WO 2002/064432

(56) References cited:
- DE-C1- 4 020 371
- GB-A- 1 161 901
- US-A- 3 873 132
- US-A- 3 940 845
- US-A- 4 201 306

## Description

The present invention relates to the packaging of fluids and, in particular, to containers having closures capable of providing resealable access to the contents thereof.

It is known from, for example, US-A-4,201,306 that an all-plastic drum construction permits a variety of sizes and capacity of drum by utilizing an extruded tube for the drum side walls of selected diameter and length proportional to the drum capacity desired. An injection molded bottom closure may be welded to the bottom end of the tube by a thermoplastic bonding material having dispersed iron particles which are excited when exposed to induction heating thereby facilitating the melting of the thermoplastic. This welding material may be disposed within a cavity defined by the bottom closure and bottom end of the tube and when subjected to induction heating and pressure and may fill the cavity to effectuate the bond between surfaces of the bottom closure and bottom end of the tube. A tight head drum may be formed by securing by a similar welding technique a top closure to the upper end of the tube. However, in the specification which follows the problems of fluid packaging will be discussed with particular reference to the problems associated with the packaging of milk. Nevertheless, it will be appreciated that other potable fluids such as water and fruit juices present similar packaging problems.

Conventionally, milk has been packaged in blow moulded plastics containers which are provided with resealable caps. The resealable caps are typically formed of injection moulded plastics material. There is however, a fundamental problem in achieving a good seal between a blow moulded plastics container and an injection moulded plastics cap. This is because the tolerance of the neck of the container may be of the order of ± 0.3mm whereas the tolerance of an injection moulded item, such as the cap, is typically ± 0.1mm. This means that it is inevitable that a proportion of the caps made to a particular specification will not seal tightly when fitted to the necks of the containers for which they are intended. This in turn leads to production difficulties in applying the caps to the container necks and leakage problems for both retailers and distributors of the packaged product.

Even when the container neck and closure are both within the tighter of the two tolerance bands, any difference between the plastics materials from which each is formed can also give rise to production difficulties. Although the blow moulded plastics containers are almost universally made of a relatively rigid material such as high density polyethylene (HDPE), when it comes to making closures for those containers there has, historically, been a balance to be struck between making the cap of a similar HDPE material or from a more flexible medium density, or even low density, polyethylene (MDPE and LDPE respectively). If the caps are formed of HDPE, it is often not possible for a capping machine, relying on the application of a simple downward force, to automatically correct a misalignment of a cap with respect to a container neck. This is because neither one of the cap or the container neck is significantly more flexible than the other. As a result, unless there is a degree of human intervention to correct the situation, which is costly both in terms of man power and lost production time, the misaligned cap is not properly sealed. This in turn permits the contents of the container to leak out, potentially damaging not only those goods with which they come into contact but also the reputation and reliability of the entire bottling and closure process. However, the situation is not significantly improved if, instead of using HDPE, the caps are made of more flexible MDPE or LDPE. Under these circumstances, whilst the positioning of an initially misaligned cap may be automatically corrected by a combination of downward pressure and flexing of the cap, there is a tendency for the harder plastics material of the neck to damage the softer plastics material forming the sealing surface of the cap. If the damage is bad enough, this can create a path by which the contents of the container may leak out past the cap.

Both of the above problems are further exacerbated by the fact that the blow moulded plastics containers are typically manufactured at a different location and by a different producer than the injection moulded plastics caps. This is because, although the containers could be supplied to the bottling plant ready formed, this would inevitability result in the need to transport large volumes. It is therefore more usual for the blow moulded containers to be produced in a blow moulding plant adjacent the dairy so that they can be formed and filled on one continuous production line. However, the consequence of having two parts, the container and the cap, which must cooperate if there is to be an adequate seal, manufactured by different parties and at different locations means that on those occasions when the sealing characteristics of a batch of containers is poor there is also a lack of accountability as to which of the container or the cap is responsible.

In order to address the problems of leakage, there have in recent years been proposed a large number of different designs of cap. For example, in one design the cap is provided with a top and a downwardly extending skirt portion which depends from the top. The skirt portion is provided on an inner surface with one or more threads for engagement with one or more complimentary threads provided on an outer surface of the container neck. A downwardly depending annular plug is provided on an underside of the top, spaced radially inwardly of the skirt. The plug is dimensioned to engage a rim of the container opening defined by the neck so as to form a primary seal. A secondary seal may be provided by means of an annular bead or shoulder provided on the cap at or adjacent the intersection of the top and the depending skirt such that, on application of the cap to the container neck, the bead or shoulder engages an external surface of the neck at a location above the threads.

In another design of cap the sealing capability may be provided by a foil liner. The underside of the foil liner is typically provided with a substance, such as an adhesive or a polymer coating, which adheres the liner to the container neck when the substance is activated by, for example, induction heating or some other means. The reliability of such a seal is, however, dependent upon a number of factors not least of which is the evenness of the surface to which the liner is to adhere. Here again, the manufacture of the blow moulded containers by a party other than the manufacturer of the injection moulded caps and liners can lead to problems. This is because different manufacturing techniques may be used to produce the container neck not all of which are compatible with the use of foil seals.

For example, container necks may be formed using a pull-up neck finish in which a blow pin is pulled up through an annular shear steel to create a neck opening having a relatively thin, but generally smooth, annular rim to which a foil liner may be readily adhered without much difficulty. However, one of the drawbacks with a pull-up neck finish is that the neck component is physically weak in its construction. The consequence of this is that, as the bore relaxes over time, the resealing capabilities of the cap (once the foil has been removed) diminish leading to possible leakage.

An alternative manufacturing technique is to use a ram-down neck finish in which a blow pin and cutting ring are rammed-down through an annular shear steel to produce a neck opening which is surrounded by a much more rigid perimeter and which contains far more plastics material than its pull-up counterpart. Whilst this rigid parameter has a number of advantages, it unfortunately results in a characteristic annular wall which projects upwardly from a radially inner edge of the annular rim (known in the art as a chimney) which makes the subsequent adhesion of a foil liner problematic.

One solution to the problem of providing a closure capable of forming a reusable and reliable seal with containers of the general type described above is disclosed in WO-A-99/61336. In this document there is proposed a bottle formed from a blow moulded plastics body and an injection moulded neck and cap assembly which can be fused to the body after the body has been filled with a fluid. In other words, the closure comprises two parts, a neck and a cap, both of which may be injection moulded to the same tolerances. This enables the cap and neck, by virtue of their mutual cooperation, to provide a plurality of reliable sealing surfaces. At the same time, the injection moulded neck is permanently adhered to the blow moulded plastics body so as to prevent any leakage between the two. However, in the described embodiment, the injection moulded neck is adhered to the blow moulded plastics body by virtue of a polymer-coated foil which is bonded on one side to the base of the neck and on the other to an annular flange surrounding the opening in the blow moulded plastics body. As a result not only is the proposed design incapable of accommodating the characteristic chimney associated with ram-down neck finishes but also there is nothing to ensure that the means used to bond the foil to both the blow moulded plastics body and the injection moulded neck does not come into contact with the contents of the container. This second point significantly increases the risk of the contents of the container, for example milk, becoming tainted or otherwise adversely affected by the bonding medium. Furthermore, the necessity of providing a foil with which to bond the injection moulded neck to the blow moulded body tends to increase the cost of the finished closure by as much as 20%.

Therefore, although it is known to overcome the difficulties associated with providing a reliable resealable closure by abandoning the previous attempt to design an injection moulded cap capable of sealingly engaging with a blow moulded container and replacing it with a two-part assembly, both parts of which may be injection moulded with one part permanently adhered to the still blow moulded container and the other part providing resealable engagement with the first part, nevertheless the problem of providing a universal assembly capable of accommodating not only pull-up neck finishes but also those of the ram-down variety still remains as does the problem of ensuring that the contents of the container are not tainted or otherwise compromised by the provision of a permanent bond between the closure assembly and the blow moulded container body. The present invention seeks to address these needs.

According to the present invention there is provided a container in combination with a closure, the container having a profile and defining an opening, the container being provided with a substantially radially extending flange surrounding said opening, and the closure having a profile and being provided with a substantially radially extending wall and a plug joined to said radially extending wall, the closure overlying the opening so as to provide resealable access to the contents of the container via said opening and the plug being adapted to be received within said opening and to sealingly engage against a rim thereof, part of the closure being permanently adhered to the container by means of a sealing medium interposed between said flange and said radially extending wall, the profile of the container and the profile of the closure cooperating to define a space for the containment of the sealing medium which does not communicate with said opening. In this way the risk of the sealing medium tainting or otherwise adversely affecting the contents of the container are significantly reduced. Additionally the use of a plug in this way greatly reduces the risk of the contents of the container leaking out between the container and that part of the closure which is permanently adhered thereto.

Advantageously the space for the containment of the sealing medium may be enclosed. As a result, the risk of the sealing medium leaking out into contact with a user of the container and closure is also reduced.

Advantageously the plug may be provided at a projecting end with a bevelled, radiused or chamfered surface to facilitate the insertion of the plug into the opening. This bevelled, radiused or chamfered surface serves to direct any contact force between the plug and the rim so as to cause the plug to flex radially inwardly such that, once in position, the resilience of the material forming the plug urges the plug into even greater sealing engagement with the rim.

Advantageously the plug and the radially extending wall serve to at least partially define the space for the containment of the sealing medium. Thus, the plug serves to not only prevent the sealing medium migrating through the opening and into contact with the contents of the container but also serves to prevent the contents of the container leaking out between the closure and the container through the sealing medium.

Where the flange surrounding the opening of the container is provided at a radially inner end with a chimney, the plug is preferably joined to the radially extending wall in such a way as to accommodate the the chimney. In this way the same closure can find use with containers having neck finishes of both the ram-down and pull-up variety.

Advantageously the plug is joined to the radially extending wall by one or more walls that with the plug define an inverted channel for the receipt of the chimney. In this way variations in the height of the chimney which is typically difficult to control using conventional blow moulded techniques can be accommodated.

Advantageously the sealing medium is annular.

Advantageously the sealing medium may comprise an electrically conductive material and a heat activated adhesive. Under such circumstances the electrically conductive material may comprise a metallic foil and the heat activated adhesive may be applied as a layer to one or more sides of the foil. In one arrangement the metallic foil may be provided with one or more apertures to permit the flow of the adhesive from one side of the foil to the other.

Advantageously the sealing medium may comprise a compound that is activated by one of pressure, exposure to microwave radiation, exposure to a time varying magnetic field or exposure to a time varying electric field.

Advantageously the sealing medium may comprise an inductive or capacitive heat activated sealing compound. Until now the use of induction heating has been associated with closures containing metal foils as it is these metal foils which are heated upon exposure to a time varying electromagnetic field in order to soften an adjacent polymer layer. However, the presence of a foil typically increases the cost of a closure by approximately 20% and, by introducing a second component part, necessarily results in a more complex construction. By use of an appropriate inductive or capacitive heat activated sealing compound these deficiencies of the prior art can be dispensed with to provide a cheaper, more reliable closure of simpler construction.

Advantageously the sealing compound may comprise a composition comprising one or more thermoplastic polyolefin polymers, one or more thermoplastic olefin-vinylester copolymers and particles of one or more inductive and/or capacitive materials. Preferably the one or more thermoplastic polyolefin polymers may be present in an amount of from 40 to 70% by weight based on the total weight of the composition. Preferably the one or more thermoplastic olefin-vinylester copolymers may be present in an amount of from 30 to 60% by weight based on the total weight of the composition. Preferably the one or more inductive and/or capacitive materials may be present in an amount of from 15 to 70% by weight based on the total weight of the composition. Preferably one or more thermoplastic elastomers may also be present in an amount of from 10 to 50% by weight based on the total weight of the composition.

Advantageously the one or more thermoplastic polyolefin polymers is/are selected from polyethylene, polypropylene, ethylene-propylene copolymer, polybutylene, polyhexylene and polyoctylene.

Advantageously the one or more thermoplastic olefin-vinylester copolymers is/are selected from olefin-vinylacetate copolymers.

Advantageously the one or more thermoplastic olefin-vinylester copolymers is/are selected from ethylene-vinylester copolymers.

Advantageously the thermoplastic olefin-vinylester copolymer is ethylene-vinylacetate copolymer. Advantageously the one or more inductive and/or capacitive materials is/are selected from metals and metallic oxides.

When a thermoplastic elastomer is present the thermoplastic elastomers is/are preferably selected from polyisoprene, polyisobutylene, polybutadiene, isoprene-isobutylene copolymer (such as crosslinked and normal butyl rubber), isoprene-butadiene copolymer, styrene-butadiene copolymer, styrene-butadiene-styrene copolymer, styrene-isoprene copolymer, styrene-isoprene-styrene copolymer, styrene-ethylene-butylene-styrene copolymer, ethylene-propylene copolymer and ethylene-propylene-diene terpolymer.

Advantageously the one or more inductive and/or capacitive materials is/are selected from aluminium, aluminium alloys, copper, copper alloys, magnetic iron oxides and magnetic chromium oxides. Preferably the inductive and/or capacitive material is aluminium.

Advantageously the particle size of the one or more inductive and/or capacitive materials may be less than 100µm.

Advantageously the composition may additionally comprise one or more mineral oils. Under such circumstances the mineral oil is preferably paraffin oil.

Advantageously the composition may additionally comprise one or more additives selected from pigments, antioxidants, fillers, stabilisers, plasticisers and lubricants.

Advantageously the sealing medium is compressible and/or flowable when subjected to induction heating such that it is capable of accommodating surface and dimensional variations associated with blow moulded neck finishes.

The closure may be of multi-part construction comprising a spout portion permanently adhered to the container and a cap portion for releasable engagement with the spout portion. Under such circumstances the closure may be provided with tamper-evidencing means. In this way a potential consumer of the contents contained within the container may be alerted to the fact that the container has already been opened. The tamper-evidencing means may take many forms but may, for example, comprise a tear band on the cap portion which is adapted to be broken away before the cap portion can first be removed from the spout portion. The tear band may comprise a drop-down tear band or else may be of the type that is torn away and discarded.

Alternatively, the closure may be of one-piece construction and comprise a spout portion permanently adhered to the container and a cap portion, the cap portion being initially joined to the spout portion but separable therefrom such that, in use, the cap portion is adapted to releasably engage the spout portion. Such a one-piece construction serves to facilitate the production process and reduces costs. The cap portion may be initially joined to the spout portion by a tear band such that once the tear band is removed the cap portion becomes separated from the spout portion.

In either the one-piece or the multi-part construction, the cap portion may be adapted to releasably engage the spout portion by means of a snap, push or friction fit. Alternatively, the cap portion may be adapted to releasably engage the spout portion by means of interengaging thread or interengaging thread and groove configurations.

The cap portion may be provided with a plug adapted to be received within the spout portion and to sealingly engage against a rim thereof. This serves to enhance the resealing capability of the closure.

Likewise, the spout portion may be provided with a membrane which initially overlies the opening in the container and which is adapted to be at least partially removed to allow access to the contents of the container. This not only serves as an additional tamper-evidencing means but also helps to prevent leakage of the contents of the container and assures consumers of its freshness. Under such circumstances the spout portion may be provided with a pull-ring connected to the membrane to facilitate the removal of at least part thereof. In addition, the membrane may be provided with a line of weakness along which the membrane is adapted to tear away. At least a portion of the membrane may be concave so as to facilitate gripping of the pull-ring and to combat the effects of shrinkage on the membrane.

A number of embodiments of the present invention will now be described by way of example with reference to the accompanying drawings in which:
Figure 1 is an elevational view of the neck structure of a container having a ram-down neck finish;
Figure 2 is a cross-sectional view of part of the neck structure of Figure 1;
Figure 3 is an elevational view of the neck structure of a container having a pull-up neck finish;
Figure 4 is a cross-sectional view of part of the neck structure of Figure 3;
Figure 5 is a cross-sectional view of a spout forming part of a closure;
Figure 6 is an enlarged cross-sectional view showing a detail of the spout of Figure 5;
Figure 7 is an elevational view of the spout of Figures 5 and 6;
Figure 8 is a plan view of the spout of Figures 5 to 7;
Figure 9 is an underneath view of the spout of Figures 5 to 8;
Figure 10 is a perspective view from above of the spout of Figures 5 to 9;
Figure 11 is a cross-sectional view of a cap forming part of a closure;
Figure 12 is an enlarged cross-sectional view showing a detail of the cap of Figure 11;
Figure 13 is a plan view of the cap of Figures 11 and 12;
Figure 14 is an enlarged plan view showing a detail of the cap of Figures 11 to 13;
Figure 15 is an elevational view of the cap of Figures 11 to 14;
Figure 16 is a cross-sectional perspective view of a closure comprising the spout of Figures 5 to 10 and the cap of Figures 11 to 15 when applied to a container having a ram-down neck finish;
Figure 17 is a perspective view of a sealing medium comprising an electrically conductive substrate and two layers of heat activated adhesive;
Figure 18 is a perspective view of a sealing medium comprising an apertured electrically conductive substrate coated with a single layer of heat activated adhesive;
Figure 19 is a cross-sectional perspective view of a closure comprising the spout of Figures 5 to 10 and the cap of Figures 11 to 15 when applied to a container having a pull-up neck finish;
Figure 20 is a cross-sectional perspective view of a closure applied to a container having a ram-down neck finish in which the cap is provided with a drop-down tear band;
Figure 21 is a cross-sectional perspective view of a closure applied to a container having a pull-up neck finish in which the cap is provided with a drop-down tear band;
Figure 22 is an elevational view of the container and closure of either of Figures 20 or 21;
Figure 23 is a cross-sectional perspective view of an alternative design of spout having a concave membrane;
Figure 24 is a cross-sectional view of an alternative design of spout in which the spout is attached to the container neck by a flexible "J-Band" retention system;
Figure 25 is a schematic cross-sectional view illustrating the "J-Band" retention system prior to the attachment of the spout to the container neck;
Figure 26 is a schematic cross-sectional view illustrating the "J-Band" retention system after the attachment of the spout to the container neck;
Figure 27 is a cross-sectional perspective view of a one-piece closure applied to a container neck having a ram-down neck finish; and
Figure 28 is a cross-sectional perspective view of a one-piece closure applied to a container neck having a pull-up neck finish.

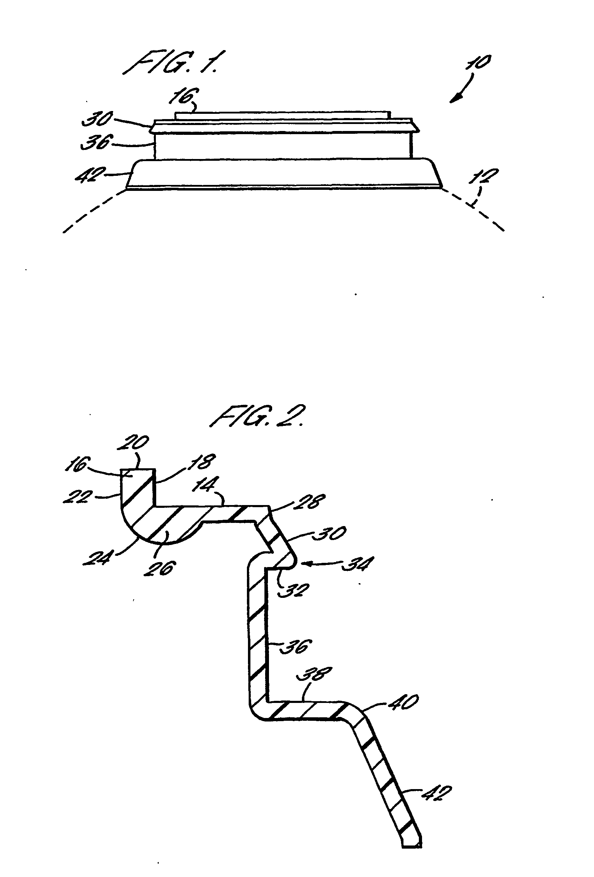

Referring to Figure 1 there is shown a neck 10 of a container 12 having a ram-down neck finish. The remainder of the container 12 has not been shown as its body shape may take any suitable form and may, for example, be of square, rectangular or circular cross-section and may have an integral handle formed as part of the body shape.

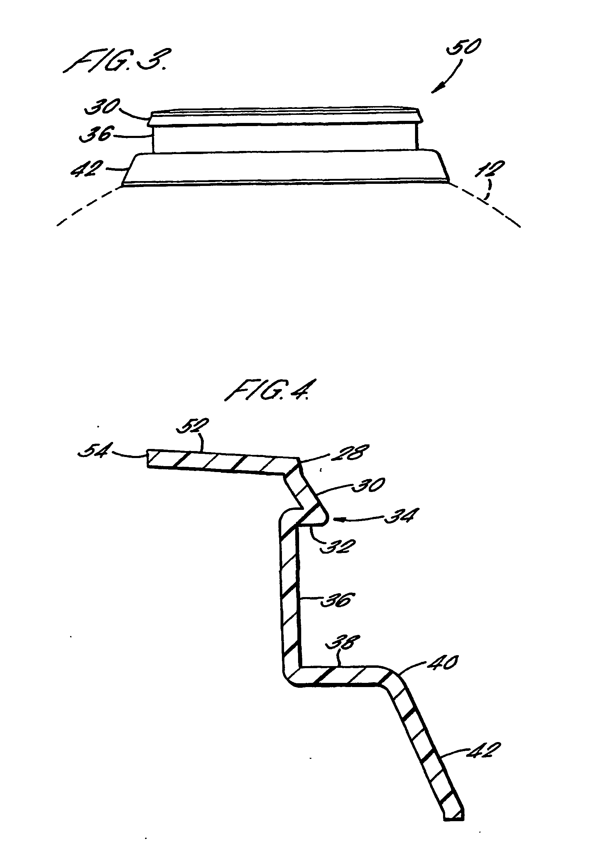

The profile of the neck 10 is shown in more detail in Figure 2 to comprise a radially extending rim 14 which merges, at a radially inner end, with a chimney 16 characteristic of ram-down neck finishes. The chimney 16 is in turn defined by an upwardly extending, radially outer wall 18; an upper, generally horizontal surface 20; and a downwardly extending, radially inner wall 22. The last of these merges, at an end remote from the upper, generally horizontal surface 20, with an initially downwardly and radially outwardly extending arcuate surface 24 which, with the radially extending rim 14 and the chimney 16, defines a thickening 26 of the container wall.

At a radially outer end, the rim 14 merges with a steeply inclined, but nevertheless radially outwardly extending, depending wall 28. For example, the wall 28 may be inclined at 12° to the vertical. The wall 28 in turn merges with a less steeply inclined but still radially outwardly extending portion 30 before merging with a radially inwardly directed wall 32 to define a nose 34. For example, the less steeply inclined portion 30 may be inclined at, say, 30° to the vertical. At a radially inner end, the radially inwardly directed wall 32 merges with a downwardly extending, substantially vertical stretch 36 before merging with a further generally horizontal, radially extending wall 38. This generally horizontal, radially extending wall 38 merges at a radially outer end with an arcuate wall portion 40 before merging with another downwardly and radially outwardly extending wall 42. The precise direction and extent of the downwardly and radially outwardly extending wall 42 are determined by the shape of the container 12 and form no part of the present invention.

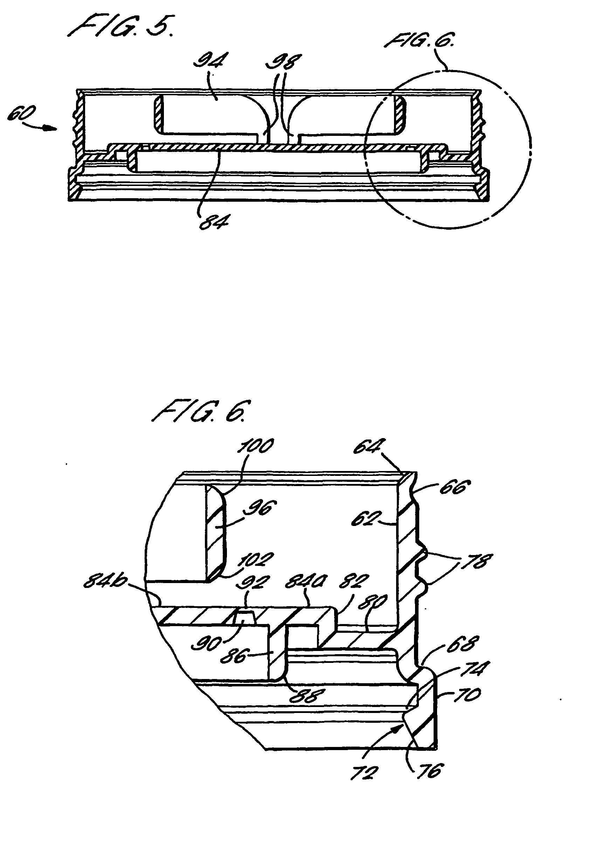

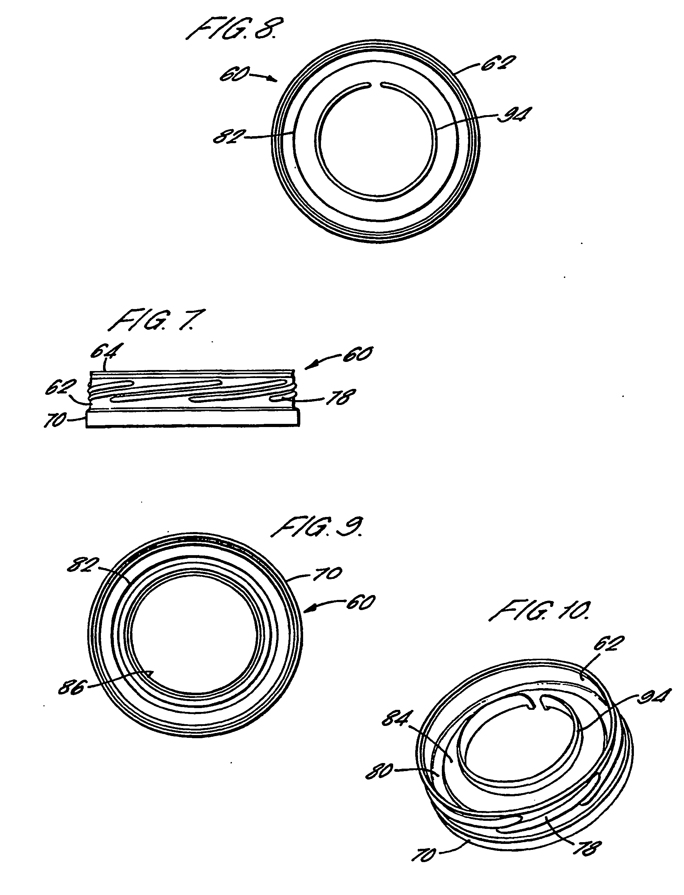

A second container neck 50 is shown in Figures 3 and 4 and is generally representative of those having a pull-up neck finish. As can be seen from Figure 4, much of the neck profile is identical to that shown in Figure 2 and for this reason like reference numerals have used to identify like parts. There is, however, a difference above and radially inwardly of the steeply inclined, but nevertheless radially outwardly extending, depending wall 28. Whereas the ram-down neck finish shown in Figure 2 exhibited a generally horizontal, radially extending rim 14 terminating at a radially inner end with a chimney 16, the pull-up neck finish of Figure 4 displays a generally upwardly inclined, radially inwardly directed rim 52 of substantially uniform thickness. The radially inwardly directed rim 52 may typically be inclined at an angle of 5° to the horizontal but there is no chimney at the radially inner end of the rim 52 and no equivalent to the thickening 26. Indeed, the radially inwardly directed rim 52 simply terminates at the radially inner end in a substantially vertical end surface 54.

Irrespective of the neck finish, the container 12 may be blow moulded from high density polyethylene (HDPE) so as to have a typical wall thickness of between 0.1mm and 1.0mm with the possible exception, in the case of the ram-down neck finish shown in Figure 2, of the chimney 16 and thickening 26. A container having a wall thickness of less than 0.1mm is unlikely to have the necessary structural integrity to hold its shape when filled with fluid. For a milk container having a capacity of up to 6 pints (3.41 litres) a wall thickness of between 0.4mm to 0.6mm is preferred.

In one embodiment, the closure for use with the container 12 comprises a two part construction made up of a spout 60 and a cap 110.

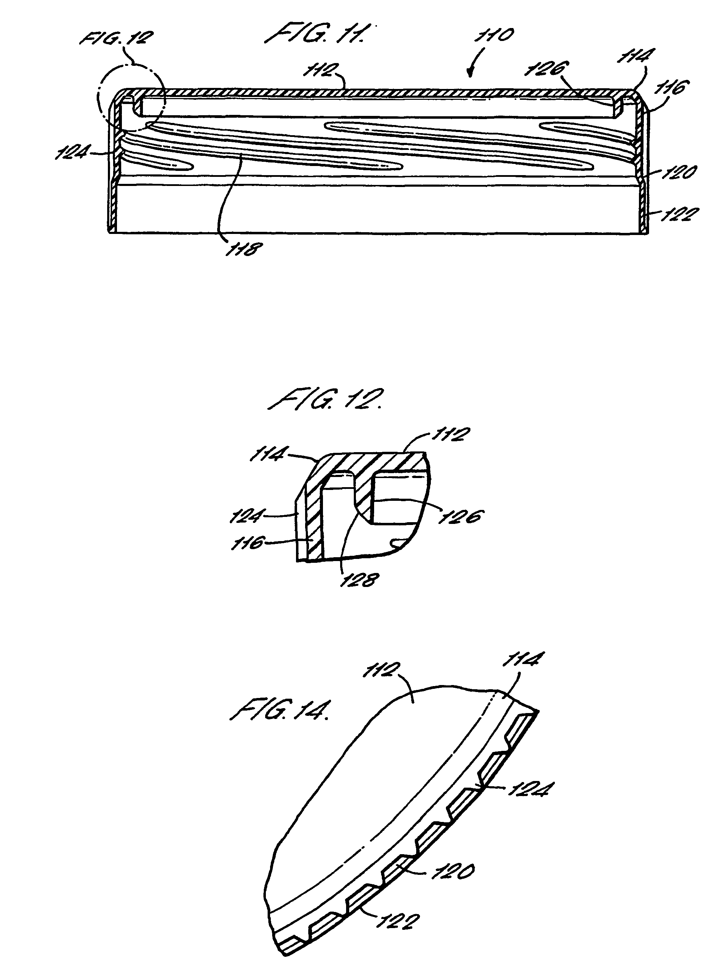

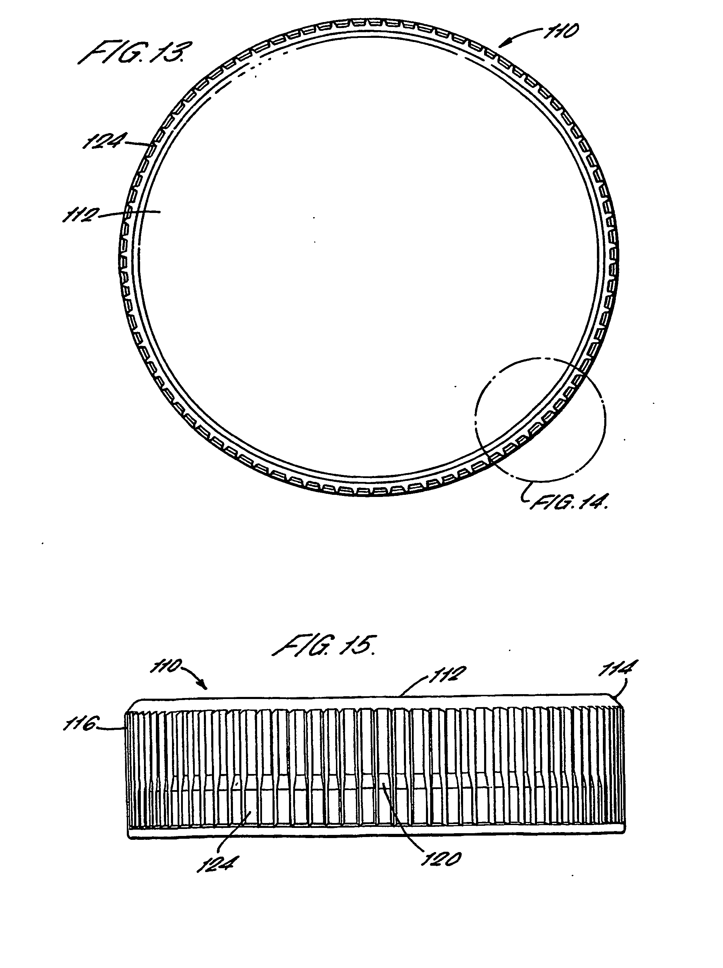

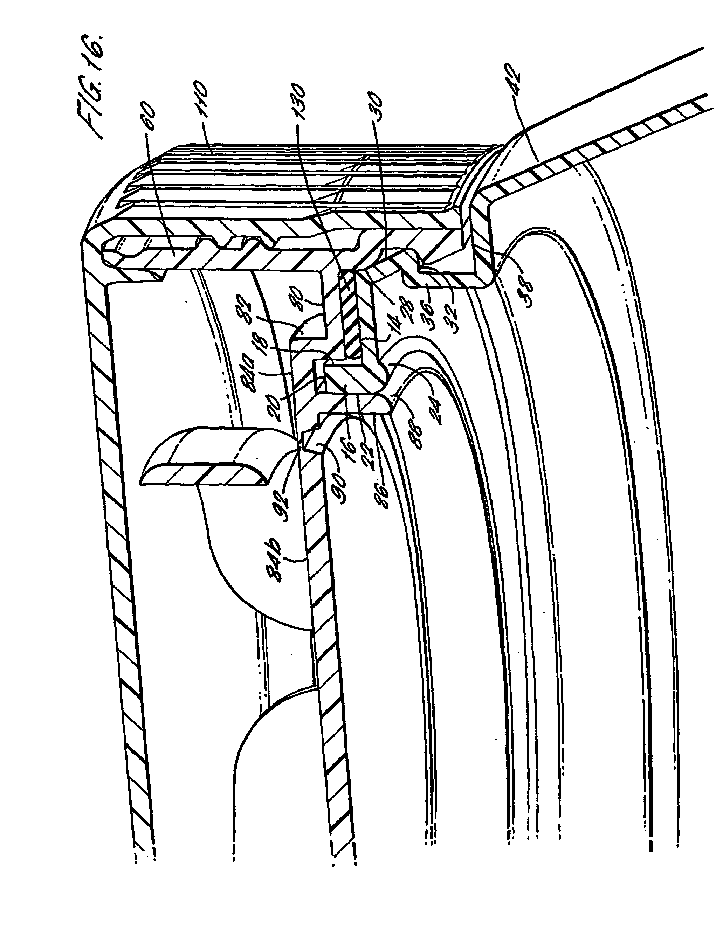

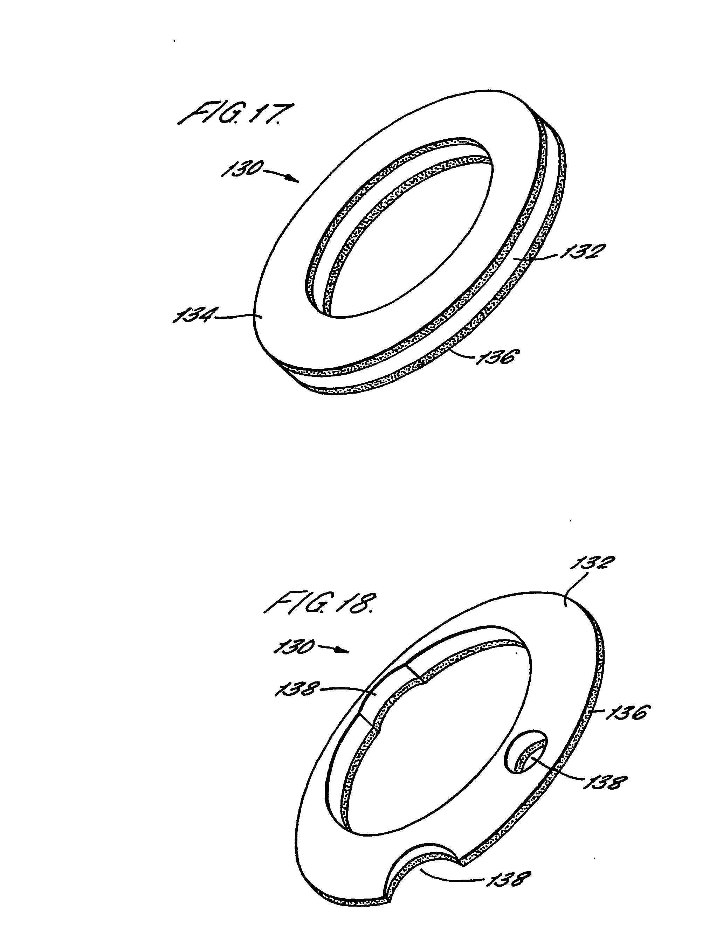

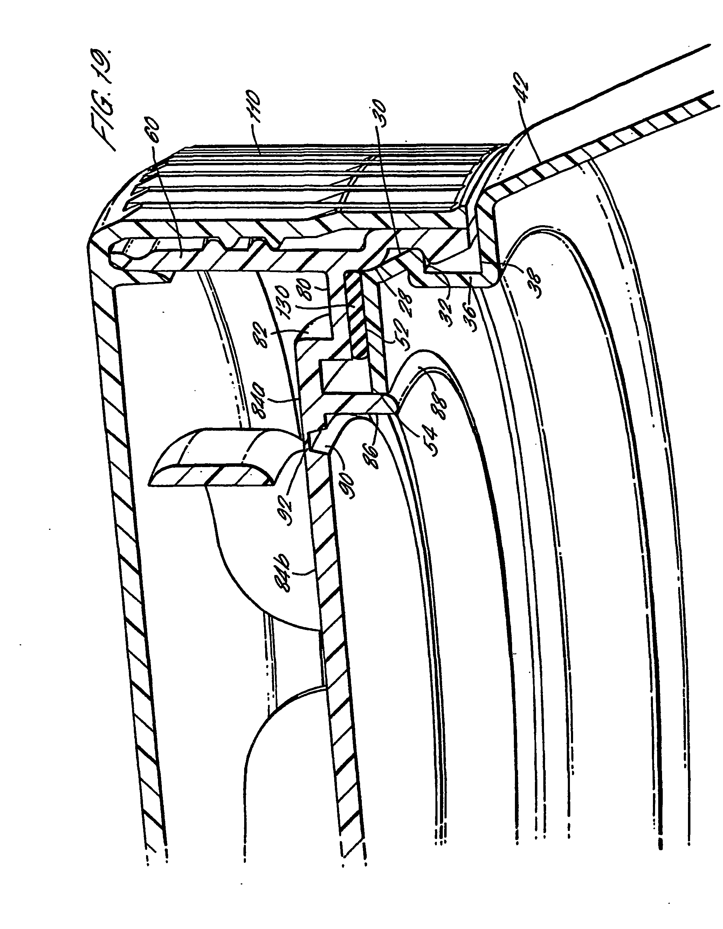

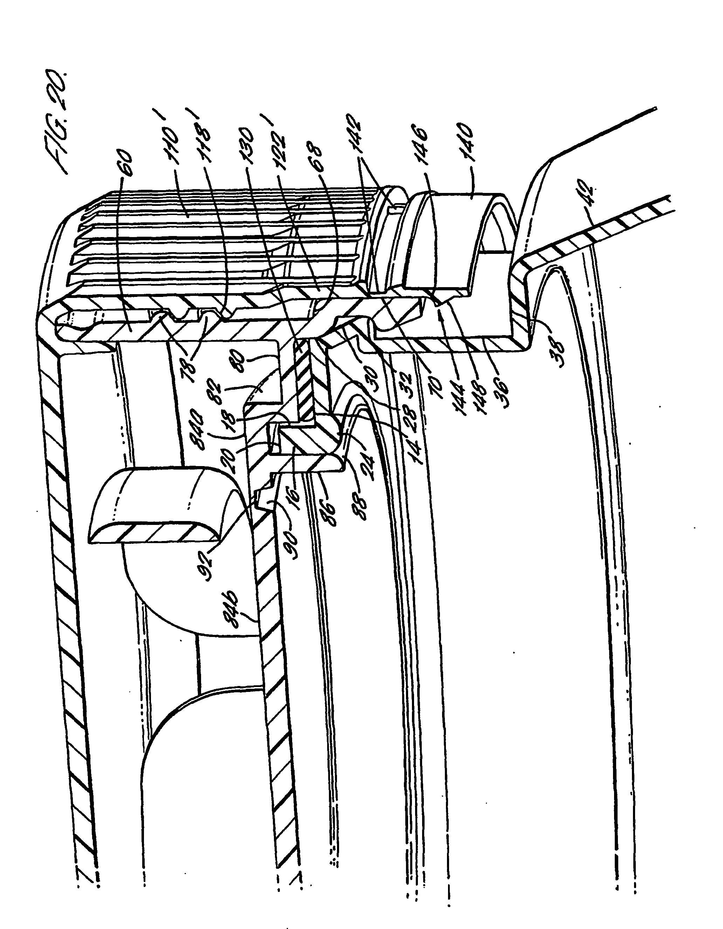

The construction of the spout 60 is shown in more detail in Figures 5 to 10 to comprise a substantially vertical annular wall 62 which terminates, at an upper end, in a generally upwardly and radially outwardly directed pour lip 64. As shown, the pour lip 64 may taper towards a pouring edge and may be formed with a shallow annular groove 66 on the external surface of the annular wall 62 where the annular wall merges with the generally upwardly and radially outwardly directed pour lip 64. At an end of the annular wall 62 remote from the pour lip 64, the annular wall merges with a radially outwardly directed shoulder 68 which in turn merges with another substantially vertical annular wall 70 of increased diameter. This lower annular wall 70 is provided, on a radially inner surface, with a radially inwardly directed lug 72 defined by mutually inclined surfaces 74 and 76, surface 74 being inclined downwardly and radially inwardly and surface 76 being inclined downwardly and radially outwardly.

On an external surface of the upper annular wall 62, intermediate the pour lip 64 and the shoulder 68, the spout 60 is provided with engagement means with which to engage complimentary engagement means provided on the cap. In the example shown, the engagement means provided on the upper annular wall 62 take the form of a helical thread configuration 78 which includes seven threads or leads. It will be apparent however, that the engagement means may take a number of different forms and, in particular, may, if the complimentary engagement means provided on the cap takes the form of a helical thread configuration, comprise a helical groove configuration. Likewise, it will be apparent that the thread or groove configuration 78 need not be limited to seven threads or grooves but may comprise one, two or more threads or grooves as appropriate. Generally speaking however, it is preferable for the configuration to comprise several threads or grooves.

In the illustrated embodiment, each thread extends about 120° around the circumference of the upper annular wall 62. Once again however, it will be understood that threads of a lesser or greater extent may also be employed. For example, each thread may extend within a range from 90° to more than 360°. If so desired the threads or grooves may be interrupted at intervals along their length.

Preferably the helical thread configuration 78 has a fine thread density to limit the vertical float of the cap on the spout 60. Thus, the thread density preferably lies within the range of between twelve and twenty threads per linear inch. Most preferably of all is a thread density of approximately seventeen or eighteen threads per liner inch.

On an internal surface, intermediate the helical thread configuration 78 and the shoulder 68, the upper, substantially vertical annular wall 62 merges with a radially inwardly directed annular wall 80 which in turn merges, at a radially inner end, with a substantially vertical cylindrical wall 82. At an upper end, the substantially vertical cylindrical wall 82 merges with a generally horizontal membrane 84 which serves to close off one end of the cylinder defined by the cylindrical wall 82. An annular plug depends from an undersurface of the membrane 84 at a location close to, but spaced radially inwardly from, the substantially vertical cylindrical wall 82. At an end remote from the membrane 84, the annular plug 86 terminates in a radiused, chamfered or bevelled surface 88. Adjacent the annular plug 86 and spaced radially inwardly therefrom, the membrane 84 is additionally provided on its undersurface with an annular groove 90 which serves to define a necked region whereby an outer annular portion of the membrane 84a is joined to a central circular portion of the membrane 84b by an annular web 92.

In contrast to the undersurface of the membrane 84, the upper surface is provided with a pull-ring 94 defined by a part annular band 96 which terminates at opposite ends in a respective leg 98. The two legs 98 merge with the membrane 84 at a location radially inwardly of and adjacent to the annular groove 90 such that the pull-ring 94 is joined to the central circular portion of the membrane 84b as opposed to the outer annular portion 84a. The part annular band 96 is sized so as to be located within the spout 60 below the level of the generally upwardly and radially outwardly directed pour lip 64 and is provided with radiused upper and lower external surfaces 100 and 102 so as to provide a comfortable surface, devoid of sharp edges, for a user's finger to pull against.

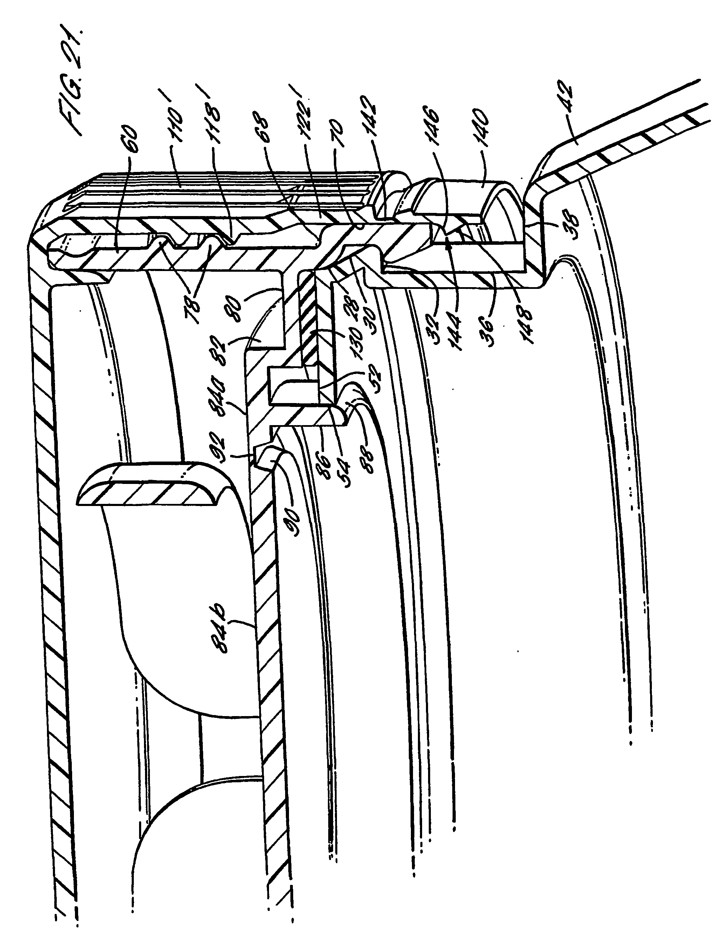

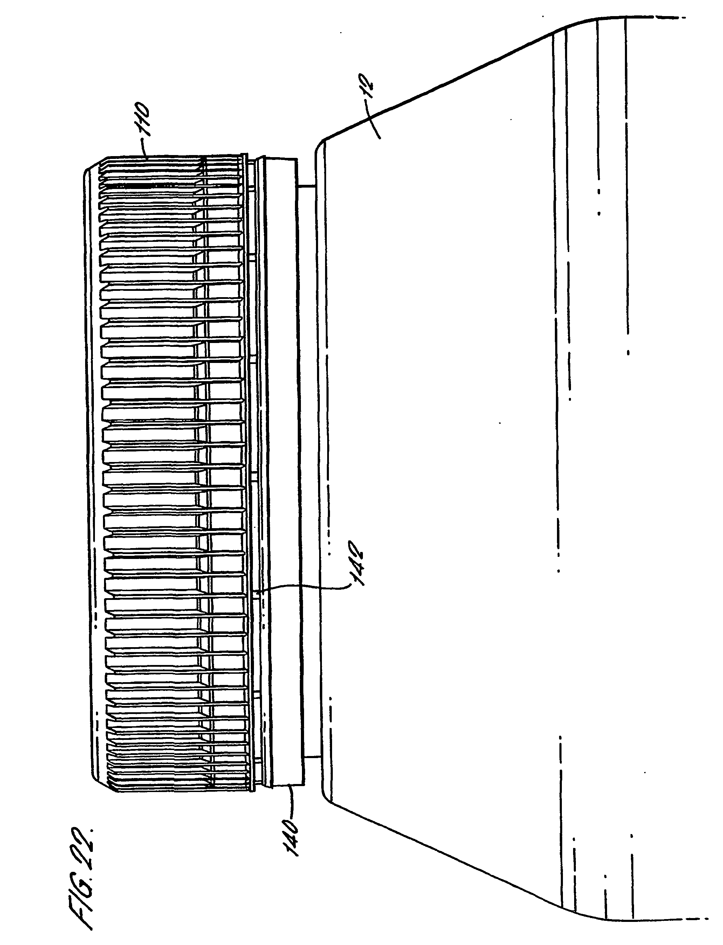

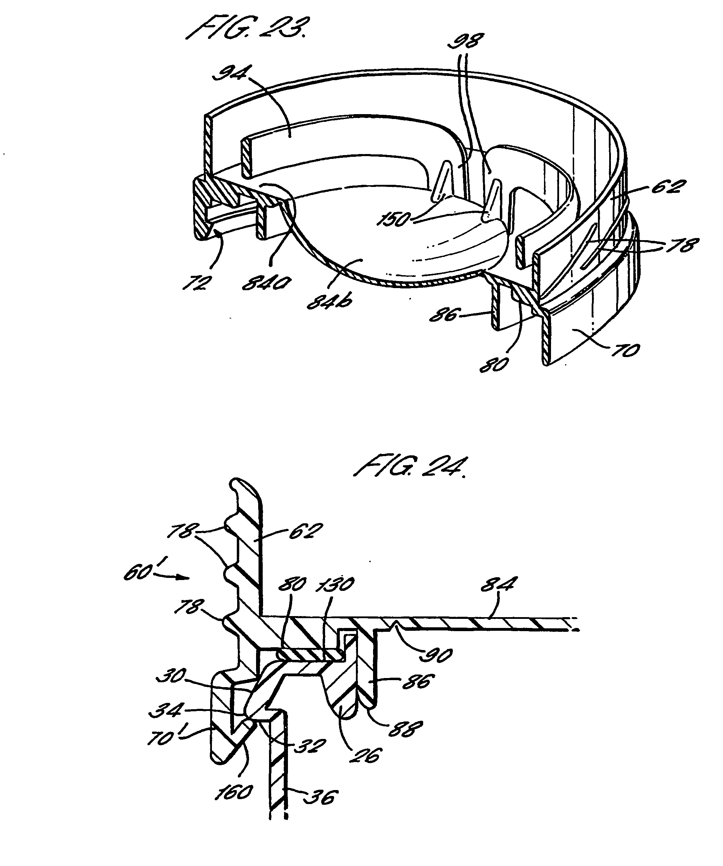

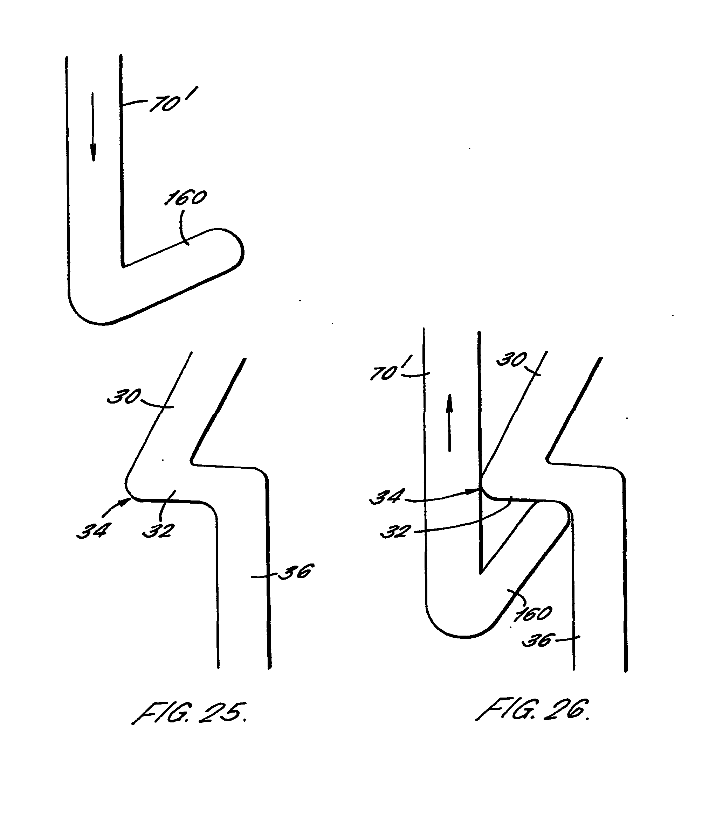

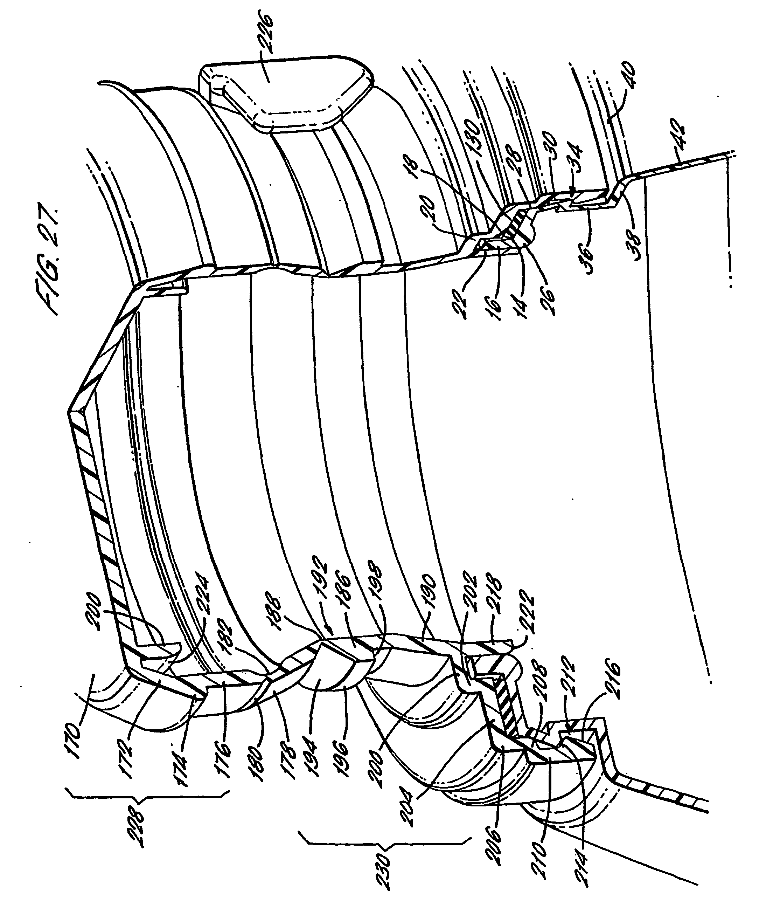

The second part of the illustrated closure comprises the cap 110 shown in Figures 11 to 15. The cap 110 comprises a circular top 112 which merges at a radially outer edge with a downwardly and radially outwardly inclined surface 114. This downwardly and radially outwardly inclined surface 114 in turn merges with a depending annular side wall 116 which is provided, on its inner surface, with complimentary engagement means for repeated and releasable engagement with the engagement means provided on the spout 60. As before, these engagement means may take many forms but, in the example shown, comprise a multi-lead helical thread configuration 118 having seven threads or leads and a thread density of approximately seventeen or eighteen threads per linear inch. Once again, it will be appreciated that, if the engagement means provided on the spout 60 comprises a helical thread configuration, then the engagement means provided on the inner surface of the depending annular side wall 116 may comprise a helical groove configuration. In the embodiment shown each thread extends approximately 120° around the inner surface of the depending annular side wall 116. However, it is to be understood that this thread length may be increased or decreased if desired. For example, each thread may extend in a range from 90° to more than 360°. Likewise the thread density is not intended to be limited to being about seventeen or eighteen threads per linear inch but nevertheless, preferably lies in the range from about twelve to twenty threads per linear inch. Preferably, the thread configuration 78 on the spout 60 and the thread configuration 118 on the cap 110 each have at least two threads and a thread density of at least twelve threads per linear inch. If so desired the threads or grooves may be interrupted at intervals along their length.

The two thread configurations 78 and 118 may be shaped so as to slip past one another and engage when a direct, axially downward force is applied to the cap 110 urging the cap into engagement with the spout 60. In other words, when the cap 110 is pushed onto the spout 60, the threads on the cap 118 snap over and engage the threads on the spout 78. This may be made possible by appropriate shaping of the threads, for example, by forming the threads with an asymmetric cross-section or by making them less pronounced. Alternatively, if it is desired to rotate the cap 110 onto the spout 60, the threads may be of symmetrical as opposed to asymmetrical cross-section and may be more pronounced.

In the illustrated embodiment, the two thread configurations 78 and 118 each comprise multiple turns of thread so that a vertical line drawn across each thread configuration intersects two or three turns of thread depending upon the location of the line around the circumference of the upper annular wall 62 or depending annular side wall 116. This ensures that when the cap 110 is applied to the spout 60 there will be multiple turns of thread engagement. Of course, the total cumulative thread engagement is subject to variation and, depending upon the linear thread density, may be as little as one turn of thread engagement or more than five turns of thread engagement.

At a region below the helical thread configuration 118, the depending annular side wall 116 merges with a further downwardly and radially outwardly inclined surface 120 before in turn merging with a further depending annular side wall 122 of increased diameter. All three of the upper and lower depending annular side walls 116 and 122 and the further downwardly and radially outwardly inclined surface 120 are provided on their external surfaces with a plurality of circumferentially spaced, vertically extending ribs 124 which serve as knurls to facilitate the gripping of the cap 110 by a user.

Adjacent and spaced radially inwardly of the downwardly and radially outwardly inclined surface 114, the circular top 112 is provided on an undersurface with a downwardly depending annular plug 126. Like the annular plug 86 provided on the undersurface of membrane 84, the downwardly depending annular plug 126 terminates at an end remote from the circular top 112 in a radiused, chamfered, or bevelled surface 128.

In use the cap 110 is applied to the spout 60. As previously stated, this may be by means of a push-on application whereby the threads on the cap 118 snap over those provided on the spout 78 or else by means of a rotary application in which the cap 110 is threaded onto the spout 60 and the two thread configurations 78 and 118 interengage in the conventional manner. In any event, it will be noted that, upon application of the cap 110 to the spout 60, the downwardly depending annular plug 126 provided on the undersurface of the circular top 112 is received within the bore defined by an upper portion of the substantially vertical annular wall 62. At the same time the pour edge, defined by an upper end of the generally upwardly and radially outwardly directed pour lip 64, engages the undersurface of the circular top 112 close to where it merges with the downwardly and radially outwardly inclined surface 114. In order to ensure that a reliable seal is provided between the downwardly depending annular plug 126 and the inner surface of the substantially vertical annular wall 62, the downwardly depending annular plug 126 is spaced from the downwardly and radially outwardly inclined surface 114 such that the plug must flex radially inwardly in order to facilitate the receipt of the upper portion of the substantially vertical annular wall 62 between it and the depending annular side wall 116. Once the substantially vertical annular wall 62 has been received in this way, the resilience of the material forming the cap 110 ensures that the downwardly depending annular plug 126 is urged into sealing engagement with an inner surface of the substantially vertical annular wall 62. During this process the radial inward flexing of the downwardly depending annular plug 126 is facilitated by the interengagement of the radiused, chamfered or bevelled surface 128 and the generally upwardly and radially outwardly directed pour lip 64.

Elsewhere it will be noted that the further downwardly and radially outwardly inclined surface 120 provided on the cap 110 ensures that the further depending annular side wall 122 fits, without resistance, over the lower annular wall 70 with both the further depending annular side wall 122 and the lower annular wall 70 terminating in substantially the same radial plane. It will also be noted that, because the pull-ring 94 is located below the level of the pour edge defined by the generally upwardly and radially outwardly directed pour lip 64, it does not interfere with the undersurface of the circular top 112 even when the cap 110 is fully applied to the spout 60.

Thus the spout 60 and cap 110 may be assembled together within the height limitations of the cap. This maintains the overall dimensions of the closure as low profile whilst optimising the height of outer diameter available for automatic gripping which is required when, for example, using pick-and-place capping equipment. It also facilitates the manual application and removal of the cap by a user.

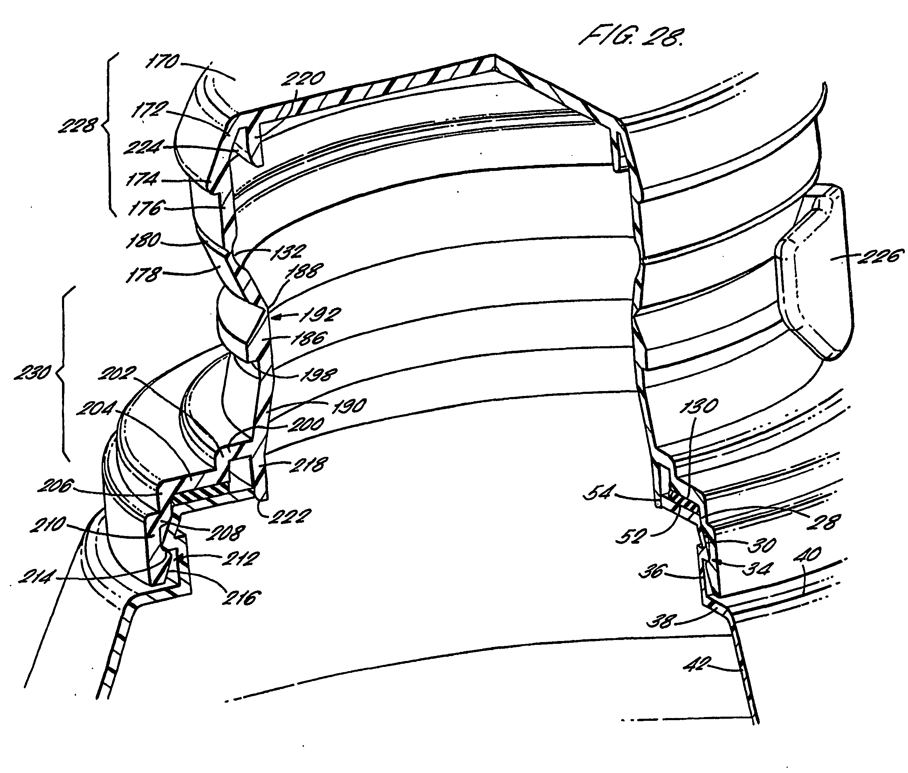

In order to assemble the closure comprising the spout 60 and the cap 110 to the container 12 a sealing medium 130 is applied to the radially extending rim 14 of the neck 10. The sealing medium 130 may be extruded, sprayed, painted or otherwise applied to the radially extending rim 14. However, in the preferred embodiment, the sealing medium 130 has sufficient structural integrity to form an annular ring which can be lifted and placed onto the radially extending rim 14 in a single placement procedure. In the embodiment shown in Figure 16 the projection of the chimney 16 through the annular ring of sealing medium 130 may serve to locate the medium and prevent it from becoming accidentally displaced.

Once the container 12 has been filled with the desired contents, the closure is offered up to the neck 10 in such a way that the radially inwardly directed lug 72 engages nose 34. Continued downward pressure of the closure onto the container neck causes the downwardly and radially outwardly inclined surface 76 to slide along first the steeply inclined but nevertheless radially outwardly extending depending wall 28 and then the less steeply inclined but still radially outwardly extending portion 30. This in turn causes the lower annular wall 70 and the further depending annular side wall 122 to flex radially outwardly until such time as the radially inwardly directed lug 72 rides over the nose 34, causing the lower annular wall 70 and the further depending annular side wall 122 to snap back into place. In this position the interengagement between the radially inwardly directed lug 72 and the nose 34 prevents the closure from being removed from the neck 10 in a simple upward movement. At the same time the proximity of the lower end of both the lower annular wall 70 and the further depending annular side wall 122 to the further generally horizontal, radially extending wall 38 prevents the insertion of a tool to prise the radially inwardly directed lug 72 over the nose 34.

As the radially inwardly directed lug 72 passes over the nose 34, the radially inwardly directed wall 80 comes into contact with the sealing medium 130 while the chimney 16 is received within the inverted annular channel defined by the substantially vertical cylindrical wall 82, the outer annular portion of the membrane 84a and the annular plug 86. Indeed, the annular plug 86 is designed to provide sealing engagement against the downwardly extending, radially inner wall 22 of the chimney 16. To that end the annular plug 86 is spaced so as to be required to flex radially inwardly in order that the chimney 16 is received within the aforementioned inverted annular channel. In this way, once the chimney 16 has been so received the resilience of the material forming the annular plug 86 causes the annular plug to be urged into sealing engagement with the downwardly extending, radially inner wall 22. Nevertheless, the radial inward flexing of the annular plug 86 is facilitated by the radiused, chamfered or bevelled surface 88 which, on application of the closure to the neck 10, is the first part of the annular plug 86 to come into contact with the chimney 16.

As can be seen from Figure 16, the positioning of the closure with respect to the neck 10 means that the sealing medium 130 is received within an enclosed annular space defined between cooperating parts of the spout and neck structures. In particular, as far as the neck structure is concerned, the space, and hence the sealing medium 130, is bounded by the radially extending rim 14 and the upwardly extending, radially outer wall 18 and upper, generally horizontal surface 20 of the chimney 16. As for the spout structure, the annular space is in part defined by the substantially vertical annular wall 62; the radially inwardly directed wall 80; the substantially vertical cylindrical wall 82; the outer annular portion of the membrane 84a; and the sealing surface of the annular plug 86.

The sealing medium 130 may comprise a sealing compound of one of the types described below.
However, in a currently preferred embodiment shown in Figure 17 the sealing medium 130 comprises a substantially planar annular electrically conductive substrate 132 coated on opposed surfaces with respective first and second layers of an adhesive 134 and 136. The electrically conductive substrate 132 may be formed of any of the materials traditionally used for providing a heat-seal in existing plastics containers and may, for example, comprise a metallic foil such as an aluminium foil. Likewise, the layers of adhesive 134 and 136 may be of any commercially available type which is capable of bonding with the surrounding plastics material once activated by, for example, the application of heat. To this end, once the container 12 has been filled, the assembled closure and container are exposed to a time varying magnetic field which gives rise to eddy currents within the electrically conductive substrate 132 and the generation of heat. This heat in turn activates the layers of adhesive 134 and 136 and bonds the spout 60 to the neck 10. If necessary some pressure may be applied to hold the closure firmly against the container 12 during the bonding process.

Although the sealing medium 130 has been described as comprising two layers of heat-activated adhesive, one on each side of a central electrically conductive substrate 132, it will be apparent that the spout 60 and neck 10 may nevertheless be permanently bonded together using only a single layer of heat-activated adhesive provided that sufficient adhesive is present within the enclosed annular space defined between cooperating parts of the spout and neck structures and provided that the adhesive is capable of flowing into contact with the surfaces defining that space. To that end the electrically conductive substrate 132 may be provided with one or more apertures 138 to permit the flow of adhesive from one side of the substrate to the other as shown in Figure 18.

As stated above, in another embodiment the sealing medium 130 may comprise a sealing compound, and in particular may comprise a pressure adhesion compound such that, upon application of a closing pressure to either the closure or the container 12, the spout 60 is permanently bonded to the neck 10. Alternatively, the sealing medium 130 may be a compound which is activated when exposed to microwave radiation. However, in yet another currently preferred embodiment, the sealing compound is a composition that permanently bonds the spout 60 to the neck 10 when the sealing compound is softened or melted by inductive and/or capacitive heating.

To this end, the sealing compound preferably comprises one or more thermoplastic polyolefin polymers, one or more thermoplastic olefin-vinylester copolymers and particles of one or more inductive and/or capacitive materials.

If desired, the composition may also comprise one or more thermoplastic elastomers. Thermoplastic elastomers may be introduced in order to vary the hardness of the resultant composition.

As used herein, the term "polymer" is not limited to polymers formed from a single monomer but also includes polymers formed from two or more different monomers. It is therefore intended to include within its scope polymers which could be further defined as "copolymers" in accordance with the definition below. Furthermore, whilst the polymer compounds identified herein consist essentially of the one or more monomer units identified therewith, it is not intended to exclude the possibility that minor amounts of other monomer units may also be included in the polymer chain, provided that they do not fundamentally alter the physical and chemical properties of the polymer.

As used herein, the term "copolymer" refers to polymers formed from two or more monomers. Thus, for example, "olefin-vinylester copolymer" refers to a copolymer formed from one or more olefins (as defined below) and one or more vinylesters (as defined below). The term "copolymer" includes within its scope random, alternating, statistical, graft and block copolymers.

As used herein the term "olefin" means an unsaturated aliphatic hydrocarbon having one or more double bonds. Preferred olefins possess only one double bond. Preferred olefins possess from 2 to 8 carbon atoms. Examples of particularly preferred olefins include; ethylene, propylene, butylene, hexylene and octylene.

As used herein the term "vinyl ester" means a compound of the general formula CH₂=CH-O-CO-R, where R is a C₁-C₈ alkyl group, preferably methyl or propyl.

As used herein the term "polyolefin polymer" means a polymer (as defined above) formed from one or more olefins (as defined above).

As used herein, the term "inductive material" means a material whose temperature may be increased by exposure to a variable magnetic field.

Capacitive welding works in a similar fashion except that the inductive material is replaced by a capacitive material and the variable magnetic field is replaced by a variable electric field. Again, the variable electric field may be provided by electromagnetic radiation. Although the capacitive material and welding material will often be different materials, in some cases they may be one and the same material. Thus, as used herein, the term "capacitive material" means a material whose temperature may be increased by exposure to a variable electric field.

In order to provide a composition which can be conveniently used for inductive or capacitive welding of the spout 60 to the neck 10, it is preferable for the composition to have a melting point in the range of from 75 to 120°C.

In one arrangement the one or more thermoplastic polyolefin polymers are present in an amount of from 40 to 70% by weight based on the total weight of the composition. Preferably, the one or more thermoplastic polyolefin polymers are present in an amount of from 50 to 60% by weight based on the total weight of the composition.

In another arrangement the one or more thermoplastic olefin-vinylester copolymers are present in an amount of from 30 to 60% by weight based on the total weight of the composition. When the vinylester content of the one or more thermoplastic olefin-vinylester copolymer is low (i.e. from 5 to 18% by weight) it is preferable that said copolymers are present in an amount of from 45 to 60% by weight based on the total weight of the composition. When the vinylester content of the one or more thermoplastic olefin-vinylester copolymer is high (i.e. from 18 to 35% by weight) it is preferable that said copolymers are present in an amount of from 30 to 45% by weight based on the total weight of the composition.

In another arrangement the one or more inductive and/or capacitive materials are present in an amount of from 15 to 70% by weight based on the total weight of the composition. Preferably, the one or more inductive and/or capacitive materials are present in an amount of from 20 to 60% by weight based on the total weight of the composition. More preferably, the one or more inductive materials are present in an amount of from 35 to 50% by weight based on the total weight of the composition.

In another arrangement one or more thermoplastic elastomers may also be present in an amount of from 10 to 50% by weight based on the total weight of the composition. Preferably, when present, the one or more thermoplastic elastomers are present in an amount of from 15 to 35% by weight based on the total weight of the composition. Elastomers may be added if a softer sealing composition is required.

The one or more thermoplastic polyolefin polymers is or are preferably selected from polyethylene, polypropylene, ethylene-propylene copolymer, polybutylene, polyhexylene and polyoctylene. Of these, the thermoplastic polyolefin polymer is preferably polyethylene. Under such circumstances the polyethylene may be selected from one or more of high density polyethylene, low density polyethylene or linear low density polyethylene. Particularly preferred polyolefins are those manufactured by single site technology using metallocene catalysts.

The one or more thermoplastic olefin-vinylester copolymers is or are preferably selected from olefin-vinylacetate copolymers. Alternatively, the one or more thermoplastic olefin-vinylester copolymers may be selected from ethylene-vinylester copolymers. In one arrangement the thermoplastic olefin-vinylester copolymer is ethylene-vinylacetate copolymer. Under such circumstances it is preferred to have a vinyl acetate content of from 5 to 35% by weight, preferably 7 to 30% by weight, more preferably 18 to 30% by weight. A vinyl acetate content of from 18 to 30% by weight is particularly preferred because such copolymers have lower melting points and better adhesion. These properties are important for producing compositions suitable for capacitive or inductive welding. A lower melting point for the olefin-vinylester copolymer results in a lower melting point for the resulting composition making it easier to weld. Improved adhesion or stickiness of the copolymer also provides a composition with better welding properties.

When used in the composition, the one or more thermoplastic elastomers preferably have a hardness of from 50 to 90 on the Shore A scale or from 25 to 40 on the Shore D scale.

The one or more thermoplastic elastomers is or are preferably selected from polyisoprene, polyisobutylene, polybutadiene, isoprene-isobutylene copolymer (such as crosslinked and normal butyl rubber), isoprene-butadiene copolymer, styrene-butadiene copolymer, styrene-butadiene-styrene copolymer, styrene-isoprene copolymer, styrene-isoprene-styrene copolymer, styrene-ethylene-butylene-styrene copolymer and ethylene-propylene copolymer and ethylene-propylene-diene terpolymer. Preferably the one or more thermoplastic elastomers are selected from styrene-butadiene-styrene copolymer, isoprene-isobutylene copolymer (such as butyl rubber) styrene-ethylene-butylene-styrene copolymer and ethylene-propylene-diene terpolymer. More preferably the thermoplastic elastomer is styrene-butadiene-styrene copolymer or ethylene-propylene-diene terpolymer.

The one or more inductive and/or capacitive materials is or are preferably selected from inductive and/or capacitive metals and inductive and/or capacitive metallic oxides. For example the one or more inductive and/or capacitive materials may be selected from aluminium, aluminum alloys, copper, copper alloys, magnetic iron oxides and magnetic chromium oxides (e.g. Cr₂O₃). Where aluminium or copper are used, they are preferably of the leafing type, i.e. they form layers. These types of aluminium and copper exhibit better heating properties.

In a preferred arrangement the inductive and/or capacitive material is aluminium. When aluminium particles are included in the composition they may be added in the form of a paste so as to minimise the safety hazards associated with the handling of finely divided aluminium particles. Alternatively, they may be added in a granulate form wherein they are premixed with a suitable polymer. Aluminium undergoes capacitive rather than inductive heating.

Advantageously the particle size of the one or more inductive and/or capacitive materials is less than 100µm. Preferably the particle size is in the range of from 2 to 100µm. More preferably 2 to 50µm and most preferably 2 to 30µm. The smaller size is preferred because it results in less wear in the extruders during production.

The composition may additionally comprises one or more mineral oils. Preferably the mineral oil is a food grade or medicinal grade mineral oil. When included in the composition, the mineral oil is preferably paraffin oil. Mineral oils are used to soften the composition and may be employed instead of or in addition to thermoplastic elastomers.

It will be apparent to a person skilled in the art that a number of further additives may be included in the composition in order to improve its physical and/or chemical properties. Thus, the composition may additionally comprise pigments to improve the visual appearance of the composition, antioxidants and/or stabilisers to maintain its chemical integrity, fillers to add bulk and/or modify its physical characteristics, and plasticisers and/or lubricants such as silicone oils and fluorinated polymers to improve the processability of the composition. Examples of suitable fillers/pigments which may be added to the composition include mica, talc, calcium carbonate, clay (such as kaolin) and titanium dioxide.

The composition may be formed by conventional techniques known in the art for the manufacture of polymer compositions. A preferred process comprises mixing the one or more thermoplastic polyolefin polymers with the one or more thermoplastic olefin-vinylester copolymers and the particles of one or more inductive and/or capacitive materials and, optionally, one or more thermoplastic elastomers; blending the mixture to provide a homogenous composition; and extruding the composition through a suitable shaped die. Both single and double screw extruders may be used. Mixing and blending can be carried out in a standard mixer such as a Banbury mixer. The plastic extrudate may conveniently be cut into individual lumps or pellets by a blade positioned directly after the orifice.

As previously mentioned, the composition is suitable for forming sealing elements which may be softened or melted by inductive and/or capacitive heating so that they are capable of forming a weld or seal between the spout 60 and the neck 10.

To this end, once the container 12 has been filled, the assembled closure and container are exposed to a time varying magnetic field in the case of inductive heating or a time varying electric field in the case of capacitive heating. In either case heat is generated within the inductive and/or capacitive material as appropriate and the heat transferred to the rest of the composition. The composition then either softens or melts so that it flows into more intimate contact with the surfaces of the enclosed annular space defined between cooperating parts of the spout and neck structures. Upon cooling, the composition hardens to provide a permanent weld or seal that bonds the spout 60 to the neck 10.

Once the spout 60 has been adhered to the neck 10, the container 12 may be opened by unscrewing and removing the cap 110. This exposes the pull-ring 94 which may be gripped by a finger of the user and pulled. The force imparted to the part annular band 96 is transferred, via the legs 98, to the central circular portion of the membrane 84b which tears away from the outer annular portion 84a along the line of weakness defined by the annular groove 90. Once the pull-ring 94 and the central circular portion of the membrane 84b to which it is attached has been discarded the contents of the container may be dispensed in the usual way.

To re-close the container the cap 110 is simply presented to the spout 60 and screwed on in such a way that the helical thread configuration 118 on the cap engages the helical thread configuration 78 on the spout. As the cap 110 is screwed home so the radiused, chamfered or bevelled surface 128 of the downwardly depending annular plug 126 engages the generally upwardly and radially outwardly directed pour lip 64. This causes the downwardly depending annular plug 126 to flex radially inwardly and enables the upper end of the substantially vertical annular wall 62 to be received between the downwardly depending annular plug 126 and the depending annular side wall 116. Once the cap 110 has been fully applied to the spout 60, the resilience of the material forming the downwardly depending annular plug 126 ensures that the plug is urged into sealing engagement with an upper inner surface of the substantially vertical annular wall 62 to provide a reliable reseal. A secondary seal is also provided by the engagement of the pour edge defined by the generally upwardly and radially outwardly directed pour lip 64 with an undersurface of the circular top 112 close to the intersection of the circular top and the downwardly and radially outwardly inclined surface 114.

The cap 110 may be screwed on and off the spout 60 as many times as is required.

It will be noted that because the sealing medium 130 is located within an enclosed space which does not communicate with the interior of the container 12 there is a significantly reduced risk of the sealing medium tainting or otherwise affecting the contents of the container. Likewise, because the spout 60 is provided with an annular plug 86 which sealingly engages against the profile of the neck 10, and in particular against the downwardly extending, radially inner wall 22 of the chimney 16, there is a reduced likelihood of the contents of the container leaking out past the sealing medium 130 between the spout 60 and the neck 10. It will also be noted that because a small gap is provided between the upper, generally horizontal surface 20 of the chimney 16 and an undersurface of the outer annular portion of the membrane 84a, the described embodiment is capable of accommodating variations in the height of the chimney 16 as a result of differences in the blow moulding process used to produce the neck 10. In this regard it will be understood by those skilled in the art that the radially extending rim 14 to which the sealing medium 130 is applied is a naturally more accurate tooling insert surface and enables an enhanced sealing potential to be realised.

It will also be noted that because both the effective size of the container opening and the size of the spout 60 are both defined by the same injection moulded component, the relationship between the two can be optimised so as to provide the optimum pouring angle whilst retaining a practical bore. This allows better parison to blow pin clearance during blow moulding of smaller range containers.

Whilst the application of the closure has been described with reference to a ram-down neck finish of the type shown in Figures 1 and 2, it will be understood that the present invention may also be applied to pull-up neck finishes of the type shown in Figures 3 and 4. Indeed in Figure 19 the closure of Figure 16 is shown applied to a pull-up neck finish and it will be noted that the only difference between the two lies at the radially inner end of the generally upwardly inclined, radially inwardly directed rim 52 where there is no chimney 16 to be received within the inverted channel defined by the substantially vertical cylindrical wall 82, the outer annular portion of the membrane 84a and the annular plug 86. In all material respects the closure may be applied, opened and resealed as described above. In particular, it will be noted that, notwithstanding the absence of the chimney 16, the sealing medium 130 is still contained within an enclosed annular space which does not communicate with the interior of the container. As before, the enclosed annular space is defined by cooperating parts of the neck and spout structures and is defined by the generally upwardly inclined, radially inwardly directed rim 52; the substantially vertical annular wall 62; the radially inwardly directed wall 80; the substantially vertical cylindrical wall 82; the outer annular portion of the membrane 84a; and the annular plug 86 which is biased, by virtue of its resilience, into sealing engagement with the substantially vertical end surface 54. Once again, because of the sealing engagement between the annular plug 86 and the substantially vertical end surface 54, there is a significantly reduced risk of the sealing medium 130 contaminating or otherwise tainting the contents of the container. There is also a much reduced risk of the contents leaking out past the sealing medium and between the spout 60 and neck 10.

Although in the embodiments described the closure has not been provided with any tamper-evidence capability, it will be understood that this could also be provided. Figure 20 shows a modified cap 110' incorporating a drop-down tear band 140 for use as part of a closure for a ram-down neck finish while Figure 21 shows the same cap modification for use with a pull-up neck finish. In each case an annular drop-down tear band 140 is provided beneath the further depending annular side wall 122' to which it is attached by circumferentially spaced, vertical webs 142. On an inner surface, the drop-down tear band is provided with a radially inwardly directed lug 144 defined by mutually inclined surfaces 146 and 148 with surface 146 being inclined downwardly and radially inwardly and surface 148 being inclined downwardly and radially outwardly.

As the modified cap 110' is applied to the spout 60, either by application of a downward axial force to snap the helical thread configuration 118' of the cap over the helical thread configuration 78 of the spout or else by simply threading the cap onto the spout, the downwardly and radially outwardly inclined surface 148 will come into engagement with the radially outwardly directed shoulder 68. This causes the drop-down tear band 140 to flex radially outwardly, allowing the radially inwardly directed lug 144 to ride over the surface of the lower annular wall 70. However, once the radially inwardly directed lug 144 passes beyond the lower end of the lower annular wall 70, it will snap back into place and take up the position shown in Figures 20 and 21. Should an attempt be made to unscrew the cap 110' from the spout 60, then, as the helical thread configuration 118' on the cap rides up the helical thread configuration 78 provided on the spout, so will the radially inwardly directed lug 144 be brought into engagement with a lower end surface of the lower annular wall 70. Further unscrewing of the cap 110' is resisted by the engagement of the radially inwardly directed lug 144 with the lower end surface of the lower annular wall 70 until such time as the vertical webs 142 joining the tear band 140 to the further depending annular side wall 122' are fractured. This releases the cap, permitting it to be unscrewed from the spout 60, but at the same time causes the tear band 140 to drop down under its own weight to rest on the further generally horizontal, radially extending wall 38 where it provides clear and unmistakable evidence that the container has been opened even if the cap 110' is subsequently reapplied to the spout 60.

It will be noted that the described tamper-evidencing capability has the advantage of not requiring a change in the design of the neck. Accordingly a common neck design may be used both with closures having a tamper-evidencing capability and those without.

Although the membrane 84 has been described as generally horizontal, it is also possible for the central circular portion 84b to be provided with a concave shape of the type shown schematically in Figure 23. In this way access to the pull-ring 94 is made easier by creating an increased void below the part annular band 96. Additionally, this design assists in reducing the affects of shrinkage on the membrane tear line defined by the annular groove 90. As illustrated, the connection between the part annular band 96 and the central circular portion of the membrane 84b may be strengthened by providing each leg 98 with a reinforcing gusset 150.

Although the spout 60 has been described as comprising a radially inwardly directed lug 72 so as to provide a snap fit over a radially outwardly directed nose 34 provided on the neck 10, the spout 60 may alternatively be provided at a lower end of the lower annular wall 70 with a "J-Band" retention system as illustrated in Figures 24 to 26. In this arrangement the lower annular wall 70' terminates in an upwardly and radially inwardly inclined projection 160 which is capable of flexing with respect to the lower annular wall 70'. As shown in Figure 25, upon application of the spout 60' to the neck 10, the upwardly and radially inwardly inclined projection 160 is pressed into engagement with the steeply inclined, but nevertheless radially outwardly extending, depending wall 28 and the less steeply inclined but still radially outwardly extending portion 30 of the nose 34. The upwardly and radially inwardly inclined projection 160 flexes with respect to the lower annular wall portion 70' so that the two subtend a more acute angle. In this position the upwardly and radially inwardly inclined projection 160 slides down the inclined wall and portion of the nose until such time as the end of the projection is pushed past the nose 34, enabling it to return to its original orientation with respect to the lower annular wall 70'. Should an attempt be made to lift the spout 60' vertically with respect to the neck 10 then, as shown in Figure 26, this movement is resisted by the upwardly and radially inwardly inclined projection 160 which engages with the radially inwardly directed wall 32 to prevent further upward movement.

The use of a "J-Band" retention system in place of a single snap bead represented by the radially inwardly directed lug 72 allows for greater initial security and an increase in dimensional tolerances on the neck 10.

It will be apparent that the radially inwardly directed lug 144 of the drop-down tear bead 140 may also be replaced with a "J-Band" type retention system.

Although the present invention has been described with reference to a two-part closure comprising a spout 60 and cap 110, it will be understood by those skilled in the art that the present invention may also find expression using a one-piece closure, for example, of the type illustrated in Figure 27.

As can be seen, the one-piece closure comprises a circular top 170 which merges at a radially outer edge with a downwardly and radially outwardly inclined surface 172. This downwardly and radially outwardly inclined surface 172 terminates at an end remote from the circular top 170 in an annular bead 174. However, intermediate the annular bead 174 and the circular top 170, the downwardly and radially outwardly inclined surface 172 merges with a substantially vertical, depending annular side wall 176. This depending annular side wall 176 in turn merges, at an end remote from the downwardly and radially outwardly inclined surface 172, with a downwardly and radially inwardly directed frustoconical wall portion 178. This merger between the depending annular side wall 176 and the frustoconical wall portion 178 is marked, on an exterior surface of the closure, by a v-shaped annular groove 180, and, on the interior surface, by a further annular groove 182, this time a semi-circular cross-section.

At an end of the frustoconical wall portion 178 remote from the depending annular side wall 176, the frustoconical wall portion tapers so that as it merges with a further substantially vertical, depending annular side wall 186 it does so by a thin web of material 188. The further depending annular side wall 186 merges with a downwardly and radially outwardly inclined annular surface 190 but at an end adjacent the frustoconical wall portion 178 is provided with a rim portion 192 defined by a further downwardly and radially outwardly inclined surface 194, a substantially vertical, cylindrical wall surface 196 and an annular undercut 198.

At an end remote from the further depending annular side wall 186, the downwardly and radially outwardly inclined annular surface 190 merges with a first radially extending annular flange 200 which in turn merges with an annular depending wall 202. Annular depending wall 202 merges with a second radially extending annular flange 204 of somewhat greater radial extent than the first and, like the first, merges with still another annular depending wall 206. Annular depending wall 206 merges with a third radially extending annular flange 208 which terminates in yet another annular depending wall 210. A radially inwardly directed lug 212, defined by mutually inclined surfaces 214 and 216, is provided on an inner surface of the annular depending wall 210 with surface 214 being inclined downwardly and radially inwardly and surface 216 being inclined downwardly and radially outwardly.

Elsewhere on the interior surface of the closure, a first depending substantially vertical, annular plug 218 is provided at the intersection of the downwardly and radially outwardly inclined surface 190 and the first radially extending annular flange 200. A second depending substantially vertical annular plug 220 is provided close to the intersection of the circular top 170 and the downwardly and radially outwardly inclined surface 172. Both the first and second depending annular plugs 218 and 220 terminate in a radiused, chamfered or bevelled surface 222 and 224, respectively.

By contrast, on the exterior, the closure is provided with a pull tab 226 which is joined to the downwardly and radially inwardly directed frustoconical wall portion 178 adjacent a line of weakness (not shown) extending through the frustoconical wall portion from the v-shaped annular groove 180 to the thin web of material 188.

In order to assemble the one-piece closure to the container 12 a sealing medium 130 having any of the forms previously described is applied to the radially extending rim 14 of the neck 10. Once the container 12 has been filled with the desired contents, the closure is offered up to the neck 10 in such a way that the radially inwardly directed lug 212 engages nose 34. Continued downward pressure of the closure onto the container neck causes the downwardly and radially outwardly inclined surface 216 to slide along first the steeply inclined but nevertheless radially outwardly extending depending wall 28 and then the less steeply inclined but still radially outwardly extending portion 30. This in turn causes the annular depending wall 210 to flex radially outwardly until such time as the radially inwardly directed lug 212 rides over the nose 34, causing the annular depending wall 210 to snap back into place. In this position the interengagement between the radially inwardly directed lug 212 and the nose 34 prevents the closure from being removed from the neck 10 in a simple upward movement. At the same time the proximity of the lower end of the annular depending wall 210 to the further generally horizontal, radially extending wall 38 prevents the insertion of a tool to prise the radially inwardly directed lug 212 over the nose 34.

As the radially inwardly directed lug 212 passes over the nose 34, the second radially extending annular flange 204 comes into contact with the sealing medium 130 while the chimney 16 is received within the inverted annular channel defined by the first radially extending annular flange 200, the annular depending wall 202 and the first depending annular plug 218. Indeed, the annular plug 218 is designed to provide sealing engagement against the downwardly extending, radially inner wall 22 of the chimney 16. To that end the annular plug 218 is spaced so as to be required to flex radially inwardly in order that the chimney 16 is received within the aforementioned annular channel. In this way, once the chimney 16 has been so received the resilience of the material forming the annular plug 218 causes the annular plug to be urged into sealing engagement with the downwardly extending, radially inner wall 22. Nevertheless, the radial inward flexing of the annular plug 218 is facilitated by the radiused, chamfered or bevelled surface 222 which, on application of the closure to the neck 10, is the first part of the annular plug 218 to come into contact with the chimney 16.

As can be seen from Figure 27, the positioning of the closure with respect to the neck 10 means that the sealing medium 130 is once again received within an enclosed annular space defined between cooperating parts of the closure and neck structures. In particular, as far as the neck structure is concerned, the space, and hence the sealing medium 130, is once again bounded by the radially extending rim 14 and the upwardly extending, radially outer wall 18 and upper, generally horizontal surface 20 of the chimney 16. As for the closure, the annular space is in part defined by the first radially extending annular flange 200; annular depending wall 202; the second radially extending annular flange 204; annular depending wall 206 and the sealing surface of the first depending annular plug 218.

If so desired annular depending wall 202 may be so spaced as to sealingly engage the upwardly extending, radially outer wall 18 of the chimney 16. Under such circumstances the annular space, and hence the sealing medium 130, would be bounded solely by the radially extending rim 14 and the upwardly extending, radially outer wall 18 of the chimney 16 on the one hand and by the second radially extending annular flange 204 and the annular depending wall 206 on the other.

Sealing engagement may also be provided between annular depending wall 206 and the steeply inclined but nevertheless radially outwardly extending depending wall 28.

Once the closure has been adhered to the neck 10 in anyone of the ways previously described, the container 12 may be opened by simply grasping and pulling at the pull tab 226. This action causes the downwardly and radially inwardly directed frustoconical wall portion 178 to be peeled away, tearing along both a first annular line of weakness defined between the v-shaped annular groove 180 and the semi-circular annular groove 182 and a second annular line of weakness defined by the thin web of material 188. Once the frustoconical wall portion 178 has been completely removed it may be discarded leaving a cap portion 228 defined by the circular top 170, the downwardly and radially outwardly inclined surface 172 and the depending annular side wall 176 separate from the rest of the closure which may in turn be termed a spout portion 230. In this condition the contents of the container may be dispensed in the usual way.

To re-close the container the cap portion 228 is simply presented to the spout portion 230 and pushed on. The lower edge of the depending annular side wall 176 slides over the downwardly and radially outwardly inclined surface 194 of the rim portion 192, causing the depending annular side wall 176 to flex radially outwardly. Once the lower edge has cleared the downwardly and radially outwardly inclined surface 194, the resilience of the material forming the depending annular side wall 176 causes an interior surface of the depending annular side wall to be urged into sealing engagement with cylindrical wall surface 196.

At the same time as the cap portion 228 is pushed home so the radiused, chamfered or bevelled surface 224 of the second depending annular plug 220 engages the interior surface of the further depending annular side wall 186. This causes the second depending annular plug 220 to flex radially inwardly and enables the upper end of the rim portion 192 to be received between the second depending annular plug and the downwardly and radially outwardly inclined surface 172. Once the cap portion 228 has been fully applied, the resilience of the material forming the second depending annular plug 220 ensures that the plug is urged into sealing engagement with an upper inner surface of the further depending annular side wall 186 to provide a reliable re-seal.

A further seal is provided by the engagement of an upper edge of the rim portion 192 with an undersurface of the circular top 170 close to the intersection of the circular top and the downwardly and radially outwardly inclined surface 172.

The cap portion may be pulled off again by applying an upward pressure to the annular bead 174.

Figure 28 shows the same one-piece closure applied to a pull up neck finish and, once again, it will be noted that the only difference between the two lies at the radially inner end of the generally upwardly inclined, radially inwardly directed rim 52 where there is no chimney 16 to be received within the inverted channel defined by the first radially extending annular flange 200, the annular depending wall 202 and the first depending annular plug 218. Nevertheless, in all material respects the closure may be applied, opened and re-sealed as described above.

Although the present invention has been described with reference to blow moulded plastics containers, it will be apparent that it is also applicable to other types of container. For example, the present invention is also applicable to containers of plastics materials other than polyethylene, as well as to those of cardboard, fibreboard, metal or glass. It will also be apparent that the closure is not limited to being formed of injection moulded plastics material.

## Claims

1. A container (12) in combination with a closure, the container having a profile and defining an opening, the container being provided with a substantially radially extending flange (14,52) surrounding said opening, and the closure having a profile and being provided with a substantially radially extending wall (80) and a plug (86) joined to said radially extending wall, the closure overlying the opening so as to provide resealable access to the contents of the container via said opening and the plug (86) being adapted to be received within said opening and to sealingly engage against a rim thereof, part of the closure being permanently adhered to the container by means of a sealing medium (130) interposed between said flange (14,52) and said radially extending wall (80), the profile of the container and the profile of the closure cooperating to define a space for the containment of the sealing medium (130) which does not communicate with said opening.

2. The combination of claim 1 wherein said space for the containment of the sealing medium (130) is enclosed.

3. The combination of claim 1 or claim 2 wherein said plug (86) is provided at a projecting end with a bevelled, radiused or chamfered surface to facilitate the insertion of the plug into said opening.

4. The combination of any preceding claim wherein said plug (86) and said radially extending wall (80) at least partially define said space for the containment of the sealing medium.

5. The combination of any of any precding claim wherein said flange is provided at a radially inner end with a chimney (16) and said plug (86) is joined to said radially extending wall in such a way as to accommodate said chimney.

6. The combination of claim 5 wherein said plug (86) is joined to said radially extending wall (80) by one or more walls that with the plug define an inverted channel for the receipt of said chimney (16).

7. The combination of any preceding claim wherein the sealing medium (130) is annular.

8. The combination of any preceding claim wherein the sealing medium (130) comprises an electrically conductive material (132) and a heat activated adhesive (134,136).

9. The combination of claim 8 wherein the electrically conductive material (132) comprises a metallic foil and the heat activated adhesive is applied as a layer to one or more sides of said foil.

10. The combination of claim 9 wherein the metallic foil is provided with one or more apertures (138) to permit the flow of adhesive from one side of said foil to the other.

11. The combination of any preceding claim wherein the sealing medium (130) comprises a compound that is activated by one selected from a list comprising pressure, exposure to microwave radiation, exposure to a time varying magnetic field or exposure to a time varying electric field.

12. The combination of any preceding claim wherein the sealing (130) medium comprises an inductive or capacitive heat activated sealing compound.

13. The combination of claim 12 wherein the sealing compound comprises a composition comprising one or more thermoplastic polyolefin polymers, one or more thermoplastic olefin-vinylester copolymers and particles of one or more inductive and/or capacitive materials.

14. The combination of claim 13 wherein the one or more thermoplastic polyolefin polymers are present in an amount of from 40 to 70% by weight based on the total weight of the composition.

15. The combination of claim 13 or claim 14 wherein the one or more thermoplastic olefin-vinylester copolymers are present in an amount of from 30 to 60% by weight based on the total weight of the composition.

16. The combination of any of claims 13 to 15 wherein the one or more inductive and/or capacitive materials are present in an amount of from 15 to 70% by weight based on the total weight of the composition.

17. The combination of any of claims 13 to 16 wherein one or more thermoplastic elastomers are also present in an amount of from 10 to 50% by weight based on the total weight of the composition.

18. The combination of any of claims 13 to 17 wherein the one or more thermoplastic polyolefin polymers is/are selected from polyethylene, polypropylene, ethylene-propylene copolymer, polybutylene, polyhexylene and polyoctylene.

19. The combination of any of claims 13 to 18 wherein the one or more thermoplastic olefin-vinylester copolymers is/are selected from olefin-vinylacetate copolymers.

20. The combination of any of claims 13 to 19 wherein the one or more thermoplastic olefin-vinylester copolymers is/are selected from ethylene-vinylester copolymers.

21. The combination of any of claims 13 to 20 wherein the thermoplastic olefin-vinylester copolymer is ethylene-vinylacetate copolymer.

22. The combination of any of claims 13 to 21 wherein the one or more inductive and/or capacitive materials is/are selected from metals and metallic oxides.

23. The combination of claim 17 wherein the one or more thermoplastic elastomers is/are selected from polyisoprene, polyisobutylene, polybutadiene, isoprene-isobutylene copolymer (such as crosslinked and normal butyl rubber), isoprene-butadiene copolymer, styrene-butadiene copolymer, styrene-butadiene-styrene copolymer, styrene-isoprene copolymer, styrene-isoprene-styrene copolymer, styrene-ethylene-butylene-styrene copolymer, ethylene-propylene copolymer and ethylene-propylene-diene terpolymer.

24. The combination of any of claims 13 to 23 wherein the one or more inductive and/or capacitive materials is/are selected from aluminium, aluminium alloys, copper, copper alloys, magnetic iron oxides and magnetic chromium oxides.

25. The combination of any of claims 13 to 24 wherein the inductive and/or capacitive material is aluminium.

26. The combination of any of claims 13 to 25 wherein the particle size of the one or more inductive and/or capacitive materials is less than 100µm.

27. The combination of any of claims 13 to 26 which additionally comprises one or more mineral oils.

28. The combination of claim 27 wherein the mineral oil is paraffin oil.

29. The combination of any of claims 13 to 28 which additionally comprises one or more additives selected from pigments, antioxidants, fillers, stabilisers, plasticisers and lubricants.

30. The combination of any preceding claim wherein the closure is of multi-part construction comprising a spout portion (60) permanently adhered to the container and a cap portion (110) for releasable engagement with the spout portion (60).

31. The combination of claim 30 wherein the closure is provided with tamper-evidencing means (140).

32. The combination of claim 31 wherein said tamper-evidencing means comprises a tear band (140) on said cap portion (110) which is adapted to be broken away before the cap portion can first be removed from the spout portion (60).

33. The combination of any of claims 1 to 29 wherein the closure is of one-piece construction and comprises a spout portion (60) permanently adhered to the container and a cap portion (110) the cap portion being initially joined to the spout portion but separable therefrom such that, in use, the cap portion is adapted to releasably engage the spout portion.

34. The combination of claim 33 wherein the cap portion (110) is initially joined to the spout portion by a tear band (140) such that once the tear band is removed the cap portion becomes separated from the spout portion.

35. The combination of any of claims 30 to 34 wherein the cap portion (110) is adapted to releasably engage the spout portion (6) by means of a snap, push or friction fit.

36. The combination of any of claims 30 to 34 wherein the cap portion (110) is adapted to releasably engage the spout portion (60) by means of interengaging thread or interengaging thread and groove configurations.

37. The combination of any of claims 30 to 36 wherein the cap portion (110) is provided with a plug (126) adapted to be received within the spout portion and to sealingly engage against a rim thereof.

38. The combination of any of claims 30 to 37 wherein the spout portion is provided with a membrane (84) which initially overlies the opening in the container and which is adapted to be at least partially removed to allow access to the contents of the container.

39. The combination of claim 38 wherein the spout portion is provided with a pull-ring (94) connected to the membrane (84) to facilitate the removal of at least a part thereof.

40. The combination of claim 38 or claim 39 wherein the membrane (84) is provided with a line of weakness along which the membrane is adapted to tear away.

41. The combination of any of claims 38 to 40 wherein at least a portion of the membrane (84) is concave.

## Patentansprüche

1. Behälter (12) in Kombination mit einem Verschluss, wobei der Behälter ein Profil aufweist und eine Öffnung definiert, der Behälter mit einem im Wesentlichen radial verlaufenden Flansch (14, 52) versehen ist, der die Öffnung umgibt, und wobei der Verschluss ein Profil aufweist und mit einer im Wesentlichen radial verlaufenden Wand (80) und einem Stopfen (86), der mit der radial verlaufenden Wand verbunden ist, versehen ist, wobei der Verschluss über der Öffnung liegt, um somit die Inhalte des Behälters über die Öffnung verschließbar zugänglich zu machen, und wobei der Stopfen (86) dafür ausgelegt ist, innerhalb der Öffnung aufgenommen zu werden und mit deren Rand dichtend in Eingriff zu gelangen, wobei ein Teil des Verschlusses mittels eines Dichtmittels (130), das zwischen dem Flansch (14, 52) und der radial verlaufenden Wand (80) eingesetzt ist, dauerhaft an dem Behälter befestigt ist, wobei das Profil des Behälters und das Profil des Verschlusses zusammenwirken, um einen Raum für die Aufnahme des Dichtmittels (130) zu definieren, der nicht mit der Öffnung in Verbindung steht.

2. Kombination nach Anspruch 1, bei der der Raum für die Aufnahme des Dichtmittels (130) geschlossen ist.

3. Kombination nach Anspruch 1 oder Anspruch 2, bei der der Stopfen (86) an einem vorstehenden Ende mit einer kegelförmigen, abgerundeten oder abgeschrägten Oberfläche versehen ist, um das Einsetzen des Stopfens in die Öffnung zu erleichtern.

4. Kombination nach irgendeinem der vorangehenden Ansprüche, bei der der Stopfen (86) und die radial verlaufende Wand (80) wenigstens zum Teil den Raum für die Aufnahme des Dichtmittels definieren.

5. Kombination nach irgendeinem der vorangehenden Ansprüche, bei der der Flansch an einem radial inneren Ende mit einem Kamin (16) versehen ist und der Stopfen (86) derart mit der radial verlaufenden Wand verbunden ist, dass er den Kamin aufnimmt.

6. Kombination nach Anspruch 5, bei der der Stopfen (86) mit der radial verlaufenden Wand (80) mittels einer oder mehreren Wänden verbunden ist, die mit dem Stopfen einen invertierten Kanal für die Aufnahme des Kamins (16) definieren.

7. Kombination nach irgendeinem der vorangehenden Ansprüche, bei der das Dichtmittel (130) ringförmig ist.

8. Kombination nach irgendeinem der vorangehenden Ansprüche, bei der das Dichtmittel (130) ein elektrisch leitendes Material (132) und einen wärmeaktivierten Klebstoff (134, 136) umfasst.

9. Kombination nach Anspruch 8, bei der das elektrisch leitende Material (132) eine metallische Folie umfasst und der wärmeaktivierte Klebstoff als eine Schicht auf eine oder mehrere Seiten der Folie aufgetragen ist.

10. Kombination nach Anspruch 9, bei der die metallische Folie mit einer oder mehreren Öffnungen (138) versehen ist, um ein Fließen des Klebstoffs von einer Seite der Folie zur anderen zu erlauben.

11. Kombination nach irgendeinem der vorangehenden Ansprüche, bei der das Dichtmittel (130) eine Verbindung/Zusammensetzung umfasst, die durch Druck oder Beaufschlagung mit einer Mikrowellenstrahlung oder Beaufschlagung mit einem zeitveränderlichen magnetischen Feld oder Beaufschlagung mit einem zeitveränderlichen elektrischen Feld aktiviert wird.

12. Kombination nach irgendeinem der vorangehenden Ansprüche, bei der das Dichtmittel (130) eine induktive oder kapazitive, wärmeaktivierte Dichtungsverbindung/Zusammensetzung umfasst.

13. Kombination nach Anspruch 12, bei der die Dichtungsverbindung/Zusammensetzung eine Zusammensetzung umfasst, die ein oder mehrere thermoplastische Polyolefin-Polymere, ein oder mehrere thermoplastische Olefin-Vinylester-Copolymere und Partikel von einem oder mehreren induktiven und/oder kapazitiven Materialien umfasst.

14. Kombination nach Anspruch 13, bei der das eine oder die mehreren thermoplastischen Polyolefin-Polymere in einer Menge von 40 bis 70 Gew.-% auf der Grundlage des Gesamtgewichts der Zusammensetzung vorhanden sind.

15. Kombination nach Anspruch 13 oder 14, bei der das eine oder die mehreren thermoplastischen Olefin-Vinylester-Copolymere in einer Menge von 30 bis 60 Gew.-% auf der Grundlage des Gesamtgewichts der Zusammensetzung vorhanden sind.

16. Kombination nach irgendeinem der Ansprüche 13 bis 15, bei der das eine oder die mehreren induktiven und/oder kapazitiven Materialien in einer Menge von 15 bis 70 Gew.-% auf der Grundlage des Gesamtgewichts der Zusammensetzung vorhanden sind.

17. Kombination nach irgendeinem der Ansprüche 13 bis 16, bei der eines oder mehrere thermoplastische Elastomere ebenfalls in einer Menge von 10 bis 50 Gew.-% auf der Grundlage des Gesamtgewichts der Zusammensetzung vorhanden sind.

18. Kombination nach irgendeinem der Ansprüche 13 bis 17, bei der das eine oder die mehreren thermoplastischen Polyolefin-Polymere aus Polyethylen, Polypropylen, Ethylen-Propylen-Copolymer, Polybutylen, Polyhexylen und Polyoctylen ausgewählt ist/sind.

19. Kombination nach irgendeinem der Ansprüche 13 bis 18, bei der das eine oder die mehreren thermoplastischen Olefin-Vinylester-Copolymere aus Olefin-Vinylacetat-Copolymeren ausgewählt ist/sind.

20. Kombination nach irgendeinem der Ansprüche 13 bis 19, bei der das eine oder die mehreren thermoplastischen Olefin-Vinylester-Copolymere aus Ethylen-Vinylester-Copolymeren ausgewählt ist/sind.

21. Kombination nach irgendeinem der Ansprüche 13 bis 20, bei der das thermoplastische Olefin-Vinylester-Copolemer Ethylen-Vinylacetat-Copolymer ist.

22. Kombination nach irgendeinem der Ansprüche 13 bis 21, bei der das eine oder die mehreren induktiven und/oder kapazitiven Materialien aus Metallen und Metalloxiden ausgewählt ist/sind.

23. Kombination nach Anspruch 17, bei der das eine oder die mehreren thermoplastischen Elastomere aus Polyisopren, Polyisobutylen, Polybutadien, Isopren-Isobutylen-Copolymer (wie z. B. quervernetzter und normaler Butylgummi), Isopren-Butadien-Copolymer, Styren-Butadien-Copolymer, Styren-Butadien-Styren-Copolymer, Styren-Isopren-Copolymer, Styren-Isopren-Styren-Copolymer, Styren-Ethylen-Butylen-Styren-Copolymer, Ethylen-Propylen-Copolymer und Ethylen-Propylen-Dien-Terpolymer ausgewählt ist/sind.

24. Kombination nach irgendeinem der Ansprüche 13 bis 23, bei der das eine oder die mehreren induktiven und/oder kapazitiven Materialien aus Aluminium, Aluminiumlegierungen. Kupfer, Kupferlegierungen, magnetischen Eisenoxiden und magnetischen Chromoxiden ausgewählt ist/sind.

25. Kombination nach irgendeinem der Ansprüche 13 bis 24, bei der das induktive und/oder kapazitive Material Aluminium ist.

26. Kombination nach irgendeinem der Ansprüche 13 bis 25, bei der die Partikelgröße des einen oder der mehreren induktiven und/oder kapazitiven Materialien kleiner als 100 µm ist.

27. Kombination nach irgendeinem der Ansprüche 13 bis 26, die zusätzlich ein oder mehrere Mineralöle umfasst.

28. Kombination nach Anspruch 27, bei der das Mineralöl Parafinöl ist.

29. Kombination nach irgendeinem der Ansprüche 13 bis 28, die zusätzlich einen oder mehrere Zusatzstoffe umfasst, ausgewählt aus Pigmenten, Antioxidationsmitteln, Füllstoffen, Stabilisatoren, Weichmachern und Schmiermitteln.

30. Kombination nach irgendeinem der vorangehenden Ansprüche, bei der der Verschluss eine mehrteilige Konstruktion ist, die einen Ausgussabschnitt (60) umfasst, der dauerhaft am Behälter befestigt ist, sowie einen Deckelabschnitt (110) für einen lösbaren Eingriff mit dem Ausgussabschnitt (60).

31. Kombination nach Anspruch 30, bei der der Verschluss mit einem Manipulationsbeweismittel (140) versehen ist.

32. Kombination nach Anspruch 31, bei der das Manipulationsbeweismittel ein Abreißband (140) auf dem Deckelabschnitt (110) umfasst, das dafür ausgelegt ist, abgerissen zu werden, bevor der Deckelabschnitt zum ersten Mal vom Ausgussabschnitt (60) abgenommen werden kann.

33. Kombination nach irgendeinem der Ansprüche 1 bis 29, bei der der Verschluss eine einteilige Konstruktion ist und einen Ausgussabschnitt (60), der dauerhaft am Behälter angebracht ist, und einen Deckelabschnitt (110) umfasst, wobei der Deckelabschnitt anfangs mit dem Ausgussabschnitt verbunden ist, jedoch von diesem trennbar ist, so dass im Gebrauch der Deckelabschnitt dafür ausgelegt ist, lösbar mit dem Ausgussabschnitt in Eingriff zu gelangen.

34. Kombination nach Anspruch 33, bei der der Deckelabschnitt (110) anfänglich mit dem Ausgussabschnitt mittels eines Abreißbandes (140) verbunden ist, so dass, sobald das Abreißband entfernt ist, der Deckelabschnitt vom Ausgussabschnitt getrennt wird.

35. Kombination nach irgendeinem der Ansprüche 30 bis 34, bei der der Deckelabschnitt (110) dafür ausgelegt ist, mit dem Ausgussabschnitt (60) mittels einer Schnapp-, Druck- oder Reibungspassung lösbar in Eingriff zu gelangen.

36. Kombination nach irgendeinem der Ansprüche 30 bis 34, bei der der Deckelabschnitt (110) dafür ausgelegt ist, mittels ineinandergreifender Gewinde oder ineinandergreifender Gewinde- und Rillenkonfigurationen mit dem Ausgussabschnitt (60) lösbar in Eingriff zu gelangen.

37. Kombination nach irgendeinem der Ansprüche 30 bis 36, bei der der Deckelabschnitt (110) mit einem Stopfen (126) versehen ist, der dafür ausgelegt ist, innerhalb des Ausgussabschnitts aufgenommen zu werden und mit dessen Rand dichtend in Eingriff zu gelangen.

38. Kombination nach irgendeinem der Ansprüche 30 bis 37, bei der der Ausgussabschnitt mit einer Membran (84) versehen ist, die anfangs über der Öffnung im Behälter liegt und die dafür ausgelegt ist, wenigstens teilweise entfernt zu werden, um einen Zugang zu den Inhalten des Behälters zu erlauben.

39. Kombination nach Anspruch 38, bei der der Ausgussabschnitt mit einem Zugring (94) versehen ist, der mit der Membran (84) verbunden ist, um das Entfernen wenigstens eines Teils derselben zu erleichtern.

40. Kombination nach Anspruch 38 oder Anspruch 39, bei der die Membran (84) mit einer Schwächungslinie versehen ist, längs der die Membran abreißen soll.

41. Kombination nach irgendeinem der Ansprüche 38 bis 40, bei der wenigstens ein Teil der Membran (84) konkav ist.

## Revendications

1. Ensemble récipient (12)/fermeture, le récipient ayant un profil et définissant une ouverture, le récipient étant doté d'un rebord (14, 52) s'étendant sensiblement radialement, entourant ladite ouverture, et la fermeture ayant un profil et étant dotée d'une paroi s'étendant sensiblement radialement (80) et d'un bouchon (86) relié à ladite paroi s'étendant radialement, la fermeture recouvrant l'ouverture afin de donner un accès refermable au contenu du récipient via ladite ouverture et le bouchon (86) étant adapté à être reçu au sein de ladite ouverture et à s'engager de manière étanche contre une bordure de celle-ci, une partie de la fermeture adhérant de façon permanente au récipient grâce à un moyen d'étanchement (130) intercalé entre ledit rebord (14, 52) et ladite paroi s'étendant radialement (80), le profil du récipient et le profil de la fermeture coopérant pour définir un espace pour le confinement du moyen d'étanchement (130) qui ne communique pas avec ladite ouverture.

2. Ensemble selon la revendication 1, dans lequel ledit espace pour le confinement du moyen d'étanchement (130) est fermé.

3. Ensemble selon la revendication 1 ou la revendication 2, dans lequel ledit bouchon (86) est doté, à une extrémité en saillie, d'une surface biseautée, arrondie ou chanfreinée pour faciliter l'insertion du bouchon dans ladite ouverture.

4. Ensemble selon l'une quelconque des revendications précédentes, dans lequel ledit bouchon (86) et ladite paroi s'étendant radialement (80) définissent, au moins en partie, ledit espace pour le confinement du moyen d'étanchement.

5. Ensemble selon l'une quelconque des revendications précédentes, dans lequel ledit rebord est doté, à une extrémité interne radialement, d'une cheminée (16) et ledit bouchon (86) est relié à ladite paroi s'étendant radialement de manière à loger ladite cheminée.

6. Ensemble selon la revendication 5, dans lequel ledit bouchon (86) est relié à ladite paroi s'étendant radialement (80) par une ou plusieurs parois qui, avec le bouchon, définissent un canal inversé pour recevoir ladite cheminée (16).

7. Ensemble selon l'une quelconque des revendications précédentes, dans lequel le moyen d'étanchement (130) est annulaire.

8. Ensemble selon l'une quelconque des revendications précédentes, dans lequel le moyen d'étanchement (130) comprend un matériau conducteur d'électricité (132) et un adhésif activé par la chaleur (134, 136).

9. Ensemble selon la revendication 8, dans lequel le matériau conducteur d'électricité (132) comprend une feuille métallique et l'adhésif activé par la chaleur est appliqué en une couche sur au moins une face de ladite feuille métallique.

10. Ensemble selon la revendication 9, dans lequel la feuille métallique est dotée d'une ou de plusieurs ouvertures (138) pour permettre l'écoulement d'adhésif d'une face de ladite feuille métallique à l'autre face.

11. Ensemble selon l'une quelconque des revendications précédentes, dans lequel le moyen d'étanchement (130) comprend un composé qui est activé par un procédé sélectionné dans une liste comprenant une pression, une exposition au rayonnement à hyperfréquence, une exposition à un champ magnétique variant dans le temps ou une exposition à un champ électrique variant dans le temps.

12. Ensemble selon l'une quelconque des revendications précédentes, dans lequel le moyen d'étanchement (130) comprend un composé d'étanchement activé par une chaleur inductive ou capacitive.

13. Ensemble selon la revendication 12, dans lequel le composé d'étanchement comprend une composition comprenant un ou plusieurs polymères polyoléfiniques thermoplastiques, un ou plusieurs copolymères oléfine/vinylester thermoplastiques et des particules d'un ou plusieurs matériaux inductifs et/ou capacitifs.

14. Ensemble selon la revendication 13, dans lequel le ou les polymères polyoléfiniques thermoplastiques sont présents en une quantité comprise entre 40 et 70 % en poids sur la base du poids total de la composition.

15. Ensemble selon la revendication 13 ou la revendication 14, dans lequel le ou les copolymères oléfine/vinylester thermoplastiques sont présents en une quantité comprise entre 30 et 60 % en poids sur la base du poids total de la composition.

16. Ensemble selon l'une quelconque des revendications 13 à 15, dans lequel le ou les matériaux inductifs et/ou capacitifs sont présents en une quantité comprise entre 15 et 70 % en poids sur la base du poids total de la composition.

17. Ensemble selon l'une quelconque des revendications 13 à 16, dans lequel un ou plusieurs élastomères thermoplastiques sont également présents en une quantité comprise entre 10 et 50 % en poids sur la base du poids total de la composition.

18. Ensemble selon l'une quelconque des revendications 13 à 17, dans lequel le ou les polymères polyoléfiniques thermoplastiques est/sont sélectionné(s) dans le groupe consistant en polyéthylène, polypropylène, copolymère éthylène/propylène, polybutylène, polyhexylène et polyoctylène.

19. Ensemble selon l'une quelconque des revendications 13 à 18, dans lequel le ou les copolymères oléfine/vinylester thermoplastiques est/sont sélectionné(s) dans le groupe consistant en copolymères oléfine/acétate de vinyle.

20. Ensemble selon l'une quelconque des revendications 13 à 19, dans lequel le ou les copolymères oléfine/vinylester thermoplastiques est/sont sélectionné(s) dans le groupe consistant en copolymères éthylène/vinylester.

21. Ensemble selon l'une quelconque des revendications 13 à 20, dans lequel le copolymère oléfine/vinylester thermoplastique est un copolymère éthylène/acétate de vinyle.

22. Ensemble selon l'une quelconque des revendications 13 à 21, dans lequel le ou les matériaux inductifs et/ou capacitifs est/sont sélectionné(s) dans le groupe consistant en métaux et oxydes métalliques.

23. Ensemble selon la revendication 17, dans lequel le ou les élastomères thermoplastiques est/sont sélectionné(s) dans le groupe consistant en polyisoprène, polyisobutylène, polybutadiène, copolymère isoprène-isobutylène (tel que réticulé et caoutchouc butyle normal), copolymère isoprène-butadiène, copolymère styrène-butadiène, copolymère styrène-butadiène-styrène, copolymère styrène-isoprène, copolymère styrène-isoprène-styrène, copolymère styrène-éthylène-butylène-styrène, copolymère éthylène-propylène et terpolymère éthylène-propylène-diène.

24. Ensemble selon l'une quelconque des revendications 13 à 23, dans lequel le ou les matériaux inductifs et/ou capacitifs est/sont sélectionné(s) dans le groupe consistant en aluminium, alliages d'aluminium, cuivre, alliages de cuivre, oxydes de fer magnétiques et oxydes de chrome magnétiques.

25. Ensemble selon l'une quelconque des revendications 13 à 24, dans lequel le matériau inductif et/ou capacitif est de l'aluminium.

26. Ensemble selon l'une quelconque des revendications 13 à 25, dans lequel la grosseur de particules du ou des matériaux inductifs et/ou capacitifs est inférieure à 100 µm.

27. Ensemble selon l'une quelconque des revendications 13 à 26, qui comprend en outre une ou plusieurs huiles minérales.

28. Ensemble selon la revendication 27, dans lequel l'huile minérale est de l'huile de paraffine.

29. Ensemble selon l'une quelconque des revendications 13 à 28, qui comprend en outre un ou plusieurs additifs sélectionnés dans le groupe consistant en pigments, antioxydants, charges, stabilisateurs, plastifiants et lubrifiants.

30. Ensemble selon l'une quelconque des revendications précédentes, dans lequel la fermeture est une construction à pièces multiples comprenant une portion bec verseur (60) adhérant en permanence au récipient et une portion capuchon (110) en engagement amovible avec la portion bec verseur (60).

31. Ensemble selon la revendication 30, dans lequel la fermeture est dotée d'un moyen à indication de violation (140).

32. Ensemble selon la revendication 31, dans lequel ledit moyen à indication de violation comprend une bande de déchirage (140) sur ladite portion capuchon (110) qui est adaptée à être détachée par rupture avant que la portion capuchon puisse être enlevée pour la première fois de la portion bec verseur (60).

33. Ensemble selon l'une quelconque des revendications 1 à 29, dans lequel la fermeture est une construction d'une seule pièce et comprend une portion bec verseur (60) adhérant en permanence au récipient et une portion capuchon (110), la portion capuchon étant initialement reliée à la portion bec verseur mais séparable de celle-ci de manière que, à l'utilisation, la portion capuchon soit adaptée à engager, de façon amovible, la portion bec verseur.

34. Ensemble selon la revendication 33, dans lequel la portion capuchon (110) est initialement reliée à la portion bec verseur par une bande de déchirage (140) de manière que, une fois la bande de déchirage enlevée, la portion capuchon soit séparée de la portion bec verseur.

35. Ensemble selon l'une quelconque des revendications 30 à 34, dans lequel la portion capuchon (110) est adaptée à engager, de façon amovible, la portion bec verseur (60) au moyen d'un ajustement à encliquetage, un ajustement gras ou un ajustement à friction.

36. Ensemble selon l'une quelconque des revendications 30 à 34, dans lequel la portion capuchon (110) est adaptée à engager, de façon amovible, la portion bec verseur (60) au moyen de filets de vis à engagement mutuel ou de filets de vis et rainures à engagement mutuel.

37. Ensemble selon l'une quelconque des revendications 30 à 36, dans lequel la portion capuchon (110) est dotée d'un bouchon (126) adapté à être reçu au sein de la portion bec verseur et à s'engager, en toute étanchéité, contre une bordure de celle-ci.

38. Ensemble selon l'une quelconque des revendications 30 à 37, dans lequel la portion bec verseur est dotée d'une membrane (84) qui recouvre initialement l'ouverture dans le récipient et qui est adaptée à être, au moins en partie, enlevée pour permettre d'accéder au contenu du récipient.

39. Ensemble selon la revendication 38, dans lequel la portion bec verseur est dotée d'un anneau à tirer (94) relié à la membrane (84) pour faciliter l'enlèvement d'au moins une partie de celle-ci.

40. Ensemble selon la revendication 38 ou la revendication 39, dans lequel la membrane (84) est dotée d'une ligne d'affaiblissement le long de laquelle la membrane est adaptée à se détacher par déchirage.

41. Ensemble selon l'une quelconque des revendications 38 à 40, dans lequel au moins une portion de la membrane (84) est concave.
